(19)

Europäisches
Patentamt

European
Patent Office

Office européen
des brevets

(11) **EP 4 783 495 A1**

(12) **EUROPEAN PATENT APPLICATION**
published in accordance with Art. 153(4) EPC

(43) Date of publication:
29.07.2026 Bulletin 2026/31

(21) Application number: 24869695.7

(22) Date of filing: 24.04.2024

(51) International Patent Classification (IPC):
*H04L 1/00* (2006.01)

(86) International application number:
PCT/CN2024/089645

(87) International publication number:
WO 2025/066126 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 CN 202311295521

(71) Applicant: ZTE Corporation
Shenzhen, Guangdong 518057 (CN)

(72) Inventors:
• LI, Lun
  Shenzhen, Guangdong 518057 (CN)

• LU, Zhaohua
  Shenzhen, Guangdong 518057 (CN)
• LI, Yong
  Shenzhen, Guangdong 518057 (CN)
• ZHENG, Guozeng
  Shenzhen, Guangdong 518057 (CN)
• XIAO, Huahua
  Shenzhen, Guangdong 518057 (CN)
• GAO, Bo
  Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **CHANNEL STATE INFORMATION REPORT FEEDBACK METHOD, APPARATUSES AND STORAGE MEDIUM**

(57)    Provided are a channel state information report feedback method, apparatuses, and a storage medium. The channel state information report feedback method comprises: acquiring configuration information, and processing a channel state information (CSI) report according to the configuration information; and sending the CSI report.

```
┌────────────────────────────────────────────┐
│ Acquire configuration information, and      │ ⟍ S101
│ process a channel state information (CSI)   │
│ report according to the configuration       │
│ information                                 │
└────────────────────────────────────────────┘
                      │
                      ▼
┌────────────────────────────────────────────┐
│                                             │ ⟍ S102
│          Send the CSI report                │
│                                             │
└────────────────────────────────────────────┘
```

FIG. 2

EP 4 783 495 A1

**Description**

The present disclosure claims priority to Chinese Patent Application No. 202311295521.X, filed on September 28, 2023, which is hereby incorporated by reference in its entirety.

TECHNICAL FIELD

The present disclosure relates to the technical field of communications, and in particular, to a channel state information report feedback method, an apparatus, and a storage medium.

BACKGROUND

In a 5G new radio (NR) system, a base station needs to transmit a downlink reference signal to a terminal to determine a channel state. After the terminal receives the downlink reference signal, the terminal measures the downlink reference signal, generates a channel state information (CSI) report, and transmits the CSI report to the base station, so that the base station may determine the channel state based on the CSI report. The base station may formulate a corresponding transmission strategy based on the channel state and transmit data, thereby improving the transmission efficiency of the data.

SUMMARY

A first aspect of embodiments of the present disclosure provides a channel state information (CSI) report feedback method. The feedback method includes: acquiring configuration information, and processing a channel state information (CSI) report according to the configuration information; and transmitting the CSI report.

A second aspect of embodiments of the present disclosure provides a communication apparatus. The communication apparatus includes: a processing module and a communication module.

The processing module is configured to acquire configuration information, and process a channel state information (CSI) report according to the configuration information; and the communication module is configured to transmit the CSI report.

A third aspect of embodiments of the present disclosure provides another communication apparatus. The communication apparatus includes a processor. The processor, upon executing a computer program, implements the CSI report feedback method of the first aspect described above.

A fourth aspect of embodiments of the present disclosure provides a computer-readable storage medium. The computer-readable storage medium includes computer instructions. The computer instructions, upon being executed, implement the CSI report feedback method of the first aspect described above.

BRIEF DESCRIPTION OF THE DRAWINGS

To describe the solutions of the present disclosure more clearly, the following briefly introduces the drawings required for use in some embodiments of the present disclosure. It is obvious that the drawings in the following description are only drawings for some embodiments of the present disclosure, and for one of ordinary skill in the art, other drawings may be obtained from these drawings.

FIG. 1 is a schematic diagram of an architecture of a communication system according to some embodiments.
FIG. 2 is a flowchart of a channel state information (CSI) report feedback method according to some embodiments.
FIG. 3 is a structural schematic diagram of a CSI report according to some embodiments.
FIG. 4 is a flowchart of another channel state information (CSI) report feedback method according to some embodiments.
FIG. 5 is a schematic diagram of a priority of a CSI report according to some embodiments.
FIG. 6 is another schematic diagram of a priority of a CSI report according to some embodiments.
FIG. 7 is yet another schematic diagram of a priority of a CSI report according to some embodiments.
FIG. 8 is yet another schematic diagram of a priority of a CSI report according to some embodiments.
FIG. 9 is yet another schematic diagram of a priority of a CSI report according to some embodiments.
FIG. 10 is yet another schematic diagram of a priority of a CSI report according to some embodiments.
FIG. 11 is yet another schematic diagram of a priority of a CSI report according to some embodiments.
FIG. 12 is yet another schematic diagram of a priority of a CSI report according to some embodiments.
FIG. 13 is yet another schematic diagram of a priority of a CSI report according to some embodiments.
FIG. 14 is yet another schematic diagram of a priority of a CSI report according to some embodiments.
FIG. 15 is yet another schematic diagram of a priority of a CSI report according to some embodiments.
FIG. 16 is yet another schematic diagram of a priority of a CSI report according to some embodiments.
FIG. 17 is yet another schematic diagram of a priority of a CSI report according to some embodiments.
FIG. 18 is yet another schematic diagram of a priority of a CSI report according to some embodiments.
FIG. 19 is yet another schematic diagram of a priority of a CSI report according to some embodiments.
FIG. 20 is yet another schematic diagram of a priority of a CSI report according to some embodiments.
FIG. 21 is yet another schematic diagram of a priority of a CSI report according to some embodiments.

FIG. 22 is yet another schematic diagram of a priority of a CSI report according to some embodiments.
FIG. 23 is yet another schematic diagram of a priority of a CSI report according to some embodiments.
FIG. 24 is yet another schematic diagram of a priority of a CSI report according to some embodiments.
FIG. 25 is yet another schematic diagram of a priority of a CSI report according to some embodiments.
FIG. 26 is yet another schematic diagram of a priority of a CSI report according to some embodiments.
FIG. 27 is yet another schematic diagram of a priority of a CSI report according to some embodiments.
FIG. 28 is yet another schematic diagram of a priority of a CSI report according to some embodiments.
FIG. 29 is yet another schematic diagram of a priority of a CSI report according to some embodiments.
FIG. 30 is a structural schematic diagram of a CSI processing unit according to some embodiments.
FIG. 31 is another structural schematic diagram of a CSI processing unit according to some embodiments.
FIG. 32 is a flowchart of yet another channel state information (CSI) report feedback method according to some embodiments.
FIG. 33 is a structural schematic diagram of a communication apparatus according to some embodiments.
FIG. 34 is a structural schematic diagram of another communication apparatus according to some embodiments.

## DETAILED DESCRIPTION

The technical solutions in the embodiments of the present disclosure will be clearly and completely described below with reference to the drawings in the embodiments of the present disclosure. Obviously, the described embodiments are only a part of the embodiments of the present disclosure, rather than all the embodiments. Based on the embodiments in the present disclosure, all other embodiments obtained by ordinary technicians in this field without creative work belong to the scope of protection in the present disclosure.

In the description of the present disclosure, unless otherwise stated, "/" indicates the meaning of "or". For example, A/B may indicate A or B. The expression "and/or" in the text is merely an associative relationship describing associated objects, indicating that three relationships may exist. For example, A and/or B may indicate: only A, only B, and both A and B. In addition, "at least one" refers to one or more, and "multiple" refers to two or more. The expressions "first" and "second" do not limit the quantity and execution order, and the expressions "first" and "second" also do not necessarily limit them to be different.

It should be noted that in the present disclosure, expressions such as "exemplarily" or "for example" are used to indicate an example, an exemplification, or an illustration. Any embodiment or design solution described as "exemplarily" or "for example" in the present disclosure should not be construed as being more preferred or advantageous than other embodiments or design solutions. Rather, using expressions such as "exemplarily" or "for example" is intended to present related concepts in a detailed manner.

In some technologies, a CSI report plays a critical role in the data transmission process. With the continuous development of communication technology, the content in the CSI report is becoming increasingly complex, and the transmission resources required for feeding back the CSI report are also increasing, even exceeding the constraint requirement of transmission resources. Therefore, how to feed back as much content as possible in the CSI report within the constraint requirement of transmission resources is an urgent problem to be solved.

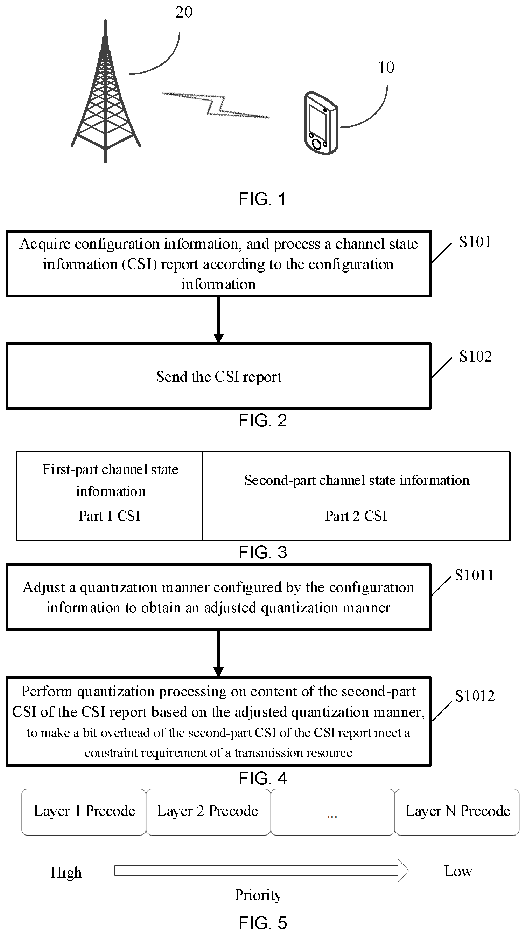

Based on this, the embodiments of the present disclosure provide a channel state information report feedback method. The feedback method may be applied to a communication system as shown in FIG. 1. FIG. 1 shows a schematic diagram of an architecture of a communication system provided in the embodiments of the present disclosure. As shown in FIG. 1, the communication system includes a first communication node 10 and a second communication node 20.

In a wireless communication scenario, the first communication node 10 and the second communication node 20 communicate via a wireless channel. For example, the first communication node is a terminal, the second communication node is a base station, and the base station and the terminal communicate via a wireless channel. As another example, the first communication node is a terminal, the second communication node is a wireless router, and the wireless router and the terminal communicate via a wireless channel. As another example, the first communication node is a first base station, the second communication node is a second base station, and the first base station and the second base station communicate via a wireless channel. As another example, the first communication node is a first terminal, the second communication node is a second terminal, and the first terminal and the second terminal communicate via a wireless channel. As another example, the first communication node is a repeater, the second communication node is a base station, and the base station and the repeater communicate via a wireless channel. As another example, the first communication node is a terminal, the second communication node is a repeater, and the repeater and the terminal communicate via a wireless channel. As another example, the first communication node is a first repeater, the second communication node is a second repeater, and the first repeater and the second repeater communicate via a wireless channel. As another example, the first communication node is a base station, the second communication node is a satellite, and the satellite and the base station communicate via a wireless channel. As another example, the first communication node is a satellite, the second communication node is a base station, and the base station and the satellite communicate via a wireless channel. As another example, the first communication node is a terminal, the second communication node is a satellite, and the satellite and the terminal communicate via a wireless channel. As another example, the first communication node is a satellite, the second communication node is a terminal, and the terminal and the satellite communicate via a wireless channel. As another example, the first communication node is ground equipment, the second communication node is an aircraft, and the aircraft and the ground equipment communicate via a wireless channel. As another example, the first communication node is a first aircraft, the second communication node is a second aircraft, and the first aircraft and the second aircraft communicate via a wireless channel.

In the embodiments of the present disclosure, a case where the first communication node 10 is a terminal and the second communication node 20 is a base station is mainly used as an example for description.

In some embodiments, the second communication node 20 is configured to provide wireless access service for multiple terminals. For example, a base station provides a service coverage area (also referred to as a cell). A terminal entering the area may communicate with the base station via a wireless signal to receive the wireless access service provided by the base station.

In some embodiments, the second communication node 20 may be a base station or an evolutional Node B (eNB or eNodeB) in long term evolution (LTE) or long term evolution advanced (LTEA), a base station device in a 5G network, or a base station in a future communication system, etc. The base station may include various network side devices such as various macro base stations, micro base stations, home base stations, radio remote units, reconfigurable intelligent surfaces (RIS), routers, and wireless fidelity (Wi-Fi) devices.

In some embodiments, the first communication node 10 may be a device with a wireless transceiver function, which may be deployed on land (including indoor or outdoor, handheld, wearable, or vehicle-mounted). The first communication node 10 may also be deployed on water (such as ships, etc.). The first communication node 10 may also be deployed in the air (for example, on airplanes, balloons, and satellites, etc.). The first communication node 10 may be a mobile phone, a tablet computer (Pad), a computer with a wireless transceiver function, a Virtual Reality (VR) terminal, an Augmented Reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, and so on. The application scenarios are not limited in the embodiments of the present disclosure. The terminal may sometimes be called a user, User Equipment (UE), an access terminal, a UE unit, a UE station, a mobile station, a mobile station, a remote station, a remote terminal, a mobile device, a UE terminal, a wireless communication device, a UE agent, or a UE apparatus, etc. The embodiments of the present disclosure do not limit this.

The embodiments of the present disclosure may be applicable to downlink data transmission, may also be applicable to uplink data transmission, and may further be applicable to device-to-device data transmission. For downlink data transmission, the transmitting end is a base station, and the corresponding receiving end is a terminal. For uplink data transmission, the transmitting end is a terminal, and the corresponding receiving end is a base station. For device-to-device data transmission, the transmitting end is a terminal, and the corresponding receiving end is also a terminal. Both the transmitting end and the receiving end in the present disclosure may include an encoding apparatus and/or a decoding apparatus, thereby being capable of modulating and encoding information to be sent, and also capable of demodulating and decoding received encoded information to achieve information transmission between the transmitting end device and the receiving end device, which are not limited in the embodiments of the present disclosure.

It should be noted that FIG. 1 is merely an exemplary framework diagram. The number of devices and the names of the devices included in FIG. 1 are not limited. In addition to the devices shown in FIG. 1, the communication system may also include other devices (such as core network devices).

The application scenarios are not limited in the embodiments of the present disclosure. The system architecture and business scenarios described in the embodiments of the present disclosure are to more clearly illustrate the technical solutions of the embodiments of the present disclosure and do not constitute a limitation to the technical solutions provided in the embodiments of the present disclosure. Those skilled in the art may know that, as network architectures evolve and new business scenarios emerge, the technical solutions provided in the embodiments of the present disclosure are also applicable to similar technical problems.

FIG. 2 shows a flowchart of a channel state information report feedback method provided in the present disclosure. As shown in FIG. 2, the channel state information report feedback method is applied to a first communication node and includes the following S101.

In S101, configuration information is acquired, and a channel state information CSI report is processed according to the configuration information.

The CSI report includes a first-part CSI and a second-part CSI. Exemplarily, as shown in FIG. 3, the first-part CSI is also referred to as first-part channel state information (part 1 CSI), and the second-part CSI is also referred to as second-part channel state information (part 2 CSI).

In some embodiments, as shown in FIG. 4, processing the channel state information csi report according to the configuration information may be implemented as the following operations, for example.

In S1011, a quantization manner configured by the configuration information is adjusted to obtain an adjusted quantization manner.

In an example, the configuration information may be used to indicate a quantization manner for configuring a CSI report.

It should be noted that before transmitting the CSI report, precoding processing needs to be performed on the content of the part 2 CSI of the CSI report, to convert the content of the part 2 CSI of the CSI report into a digital signal capable of being transmitted or processed, to obtain a precode or a precoding matrix, thus to perform quantization processing on the elements in the precode or the precoding matrix into a bit sequence. The precode consists of a plurality of elements, and different quantization manners may be adopted for each element.

In an example, the precoding processing may be a codebook processing manner or an artificial intelligence/machine learning model processing manner. The quantization manner may be quantization precision, a quantized bit sequence, or a quantization type. A quantization type includes a scalar quantization type and a vector quantization type. A scalar quantization type includes a uniform scalar quantization type and a non-uniform scalar quantization type. In some embodiments, the quantization precision configured by the configuration information is adjusted to obtain adjusted quantization precision.

In an example, after the precoding processing is performed on the CSI report, a precode is obtained. The precode consists of 50 elements. The quantization precision configured by the configuration information is 3 bits per element for each element, resulting in a total bit overhead of 150 bits. To ensure that a transmission resource is capable of transmitting all elements in the precode, the quantization precision of each element in the precode is adjusted to 2 bits per element, resulting in a total bit overhead of 100 bits.

In some embodiments, the quantized bit sequence configured by the configuration information is adjusted to obtain an adjusted quantized bit sequence.

In an example, after the precoding processing is performed on the CSI report, a precode is obtained. The quantization precision configured by the configuration information is 3 bits per element, the quantized bit sequence of element A after bit quantization is 101, and the quantized bit sequence of element B after bit quantization is 001. To ensure that a transmission resource is capable of transmitting all elements in the precode, the quantized bit sequence for element quantization is adjusted, by truncating the last bit of the quantized bit sequence corresponding to the elements in the precode; after adjustment, the quantized bit sequence corresponding to element A is 10, and after adjustment, the quantized bit sequence corresponding to element B is 00.

It should be noted that the quantization manner described in the present disclosure may be set according to actual situations. Taking quantization precision as an example, the quantization precision may be 3 bits per element, or may be 5 bits per element; the same applies to other quantization manners, such as a quantized bit sequence. Furthermore, the quantization manner may be configured by the second communication node, or may be configured by the first communication node, with the detailed configuration being reported to the second communication node, which is not limited in the present disclosure.

In S1012, quantization processing is performed on the content of the part 2 CSI of the CSI report based on the adjusted quantization manner, to make a bit overhead of the second-part CSI of the CSI report meet a constraint requirement of a transmission resource.

In an example, taking the example in S1011, after adjusting the quantization precision, when performing quantization processing on the content of the part 2 CSI of the CSI report, the bit overhead is reduced from the original 150 bits to 100 bits. After adjusting the quantized bit sequence, when performing quantization processing on the content of the part 2 CSI of the CSI report, the bit overhead is reduced from the original 150 bits to 100 bits.

In this way, by adjusting the quantization manner configured by the configuration information, the content of as much as possible of the CSI report is capable of being transmitted, thereby improving the content integrity of the CSI report.

In S102, the CSI report is transmitted.

It should be noted that the report content in the CSI report transmitted by the first communication node to the second communication node is represented in the form of bits, or is represented by elements represented by bit groups. For example, the report content in the CSI report may be precoding matrix information represented by bits, or precoding matrix information represented by elements represented by bit groups.

The CSI report includes a part 1 CSI and a part 2 CSI.

In some embodiments, transmitting the CSI report may be implemented, for example, as the following operation: transmitting a segment in the part 2 CSI of the CSI report based on a priority of the segment in the part 2 CSI of the CSI report.

In some embodiments, the priority of a segment may be determined according to a layer to which the segment belongs.

The priority of a segment is determined according to at least one of the following: a layer to which the segment belongs, a layer group where the segment is located, frequency domain information corresponding to the segment, time domain information corresponding to the segment, spatial domain information corresponding to the segment, and a quantization manner for the segment.

A priority of a segment belonging to a layer with a lower index is higher than a priority of another segment belonging to another layer with a higher index. In an example, as shown in FIG. 5, the part 2 CSI of the CSI report includes N layers, and a priority of a segment in layer 1 is higher than a priority of a segment in layer 2, and is also higher than a priority of a segment in layer N.

In some embodiments, the priority of a segment may be determined according to a layer group where the segment is located.

A segment belonging to a layer group with a lower index has a higher priority than a segment belonging to a layer group with a higher index.

As an implementation, grouping may be performed according to layers included in the part 2 CSI of the CSI report.

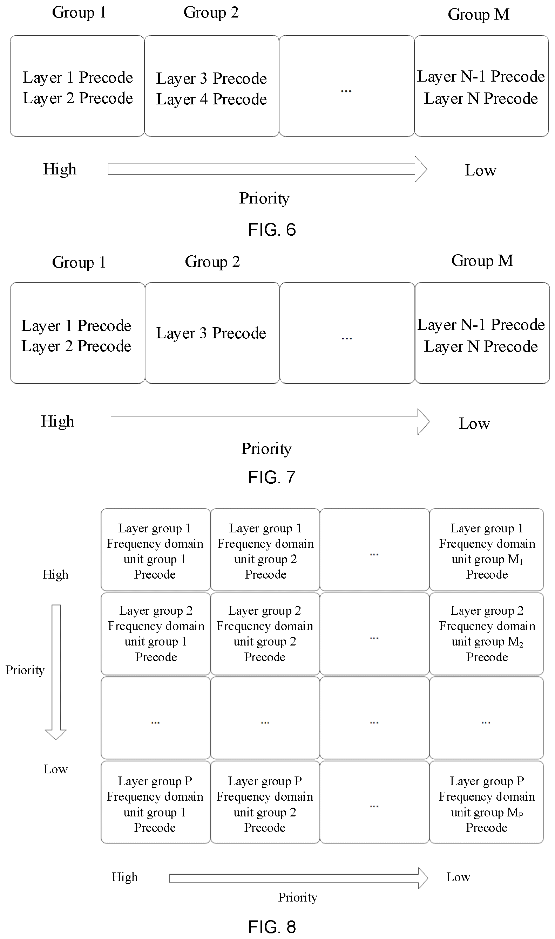

In some embodiments, as shown in FIG. 6, the N layers included in the part 2 CSI of the CSI report may be equally allocated to obtain M layer groups. Each layer group includes two layers. A priority of a segment in group 1 is higher than a priority of a segment in group 2, and is also higher than a priority of a segment in group M.

In some embodiments, as shown in FIG. 7, the N layers included in the part 2 CSI of the CSI report may be unequally allocated to obtain M layer groups. A priority of a segment in group 1 is higher than a priority of a in group 2, and is also higher than a priority of a segment in group M.

In some embodiments, the priority of a segment may be determined according to frequency domain information corresponding to the segment.

In an example, the frequency domain information is also referred to as a frequency domain unit. The granularity of the frequency domain unit includes at least one of the following: a subcarrier, a resource element (RE), a resource element group (REG), a resource block (RB), a resource block group (RBG), and a sub-band (Sub-band).

In some embodiments, the frequency domain units may be divided into an even-numbered frequency domain unit group and an odd-numbered frequency domain unit group according to an index of a frequency domain unit. The priority of a segment may be determined according to a group to which a frequency domain unit corresponding to the segment belongs. In an example, a segment corresponding to a frequency domain unit belonging to an even-numbered frequency domain unit group has a higher priority than a segment corresponding to a frequency domain unit belonging to an odd-numbered frequency domain unit group.

In some embodiments, the frequency domain units may be divided into a plurality of frequency domain unit groups according to an index corresponding to a frequency domain unit, and the priority of a segment may be determined according to a frequency domain unit group to which a frequency domain unit corresponding to the segment belongs.

In an example, each frequency domain unit group may include the same number of frequency domain units, or each frequency domain unit group may also include different numbers of frequency domain units. The frequency domain units in each frequency domain unit group may be frequency domain units with consecutive indices, or each frequency domain unit group may also be frequency domain units with non-consecutive indices. A segment corresponding to a frequency domain unit belonging to a frequency domain unit group with a lower group index has a higher priority than a segment corresponding to a frequency domain unit belonging to a frequency domain unit group with a higher group index.

In some embodiments, the priority of a segment may be determined according to a layer group where the segment is located and frequency domain information corresponding to the segment.

In some embodiments, a priority of a layer group where a segment is located is higher than a priority of frequency domain information corresponding to the segment, and a segment belonging to a layer group with a lower index has a higher priority than a segment belonging to a layer group with a higher index. In a same layer group, a priority of a segment corresponding to a frequency domain unit belonging to a frequency domain unit group with a lower group index is higher than a priority of a segment corresponding to a frequency domain unit belonging to a frequency domain unit group with a higher group index.

In an example, as shown in FIG. 8, in the arrangement from left to right, a segment in frequency domain unit group 1 and layer group 1 has a higher priority than a segment in frequency domain unit group 2 and layer group 1, and a segment in frequency domain unit group 2 and layer group 1 has a higher priority than a segment in frequency domain unit group $M_1$ of layer group 1. In the arrangement from top to bottom, a segment in frequency domain unit group 1 and layer group 1 has a higher priority than a segment in frequency domain unit group 1 and layer group 2. A segment in frequency domain unit group 1 and layer group 1 has the highest priority, and a segment in frequency domain unit group $M_P$ of layer group P has the lowest priority.

It should be noted that in the schematic diagram of segment priority as shown in FIG. 8, a priority of a row to which a segment belongs is higher than a priority of a column to which the segment belongs; for example, a segment in frequency domain unit group $M_1$ of layer group 1 has a higher priority than a segment in frequency domain unit group 1 and layer group 2. Alternatively, a priority of a column to which a segment belongs is higher than a priority of a row to which the segment belongs; for example, a segment in frequency domain unit group 1 of layer group P has a higher priority than a segment in frequency domain unit group 2 and layer group 1.

In FIG. 8, the priority of a segment is determined comprehensively based on two pieces of information: the layer group where the segment is located and the frequency domain information corresponding to the segment, which is also described as a two-dimensional determination method or a multi-dimensional determination method. In the embodiments provided in the present disclosure, in the two-dimensional determination method shown in FIG. 8 and other multi-dimensional determination methods such as the one-dimensional determination method, the two-dimensional determination method, or the three-dimensional determination method in other embodiments, the priority arrangement condition may be set according to actual conditions, and is not limited to the priority arrangement condition described in the embodiments provided in the present disclosure, and the present disclosure does not impose any limitation on this.

In some embodiments, the priority of the frequency domain information corresponding to a segment is higher than the priority of the layer group where the segment is located, and the priority of the segment corresponding to a frequency domain unit with a lower group index of the frequency domain unit group to which it belongs is higher than the priority of the segment corresponding to a frequency domain unit with a higher group index of the frequency domain unit group to which it belongs. In the same frequency domain unit group, the priority of a segment with a lower index of the layer group where it is located is higher than the priority of a segment with a higher index of the layer group where it is located.

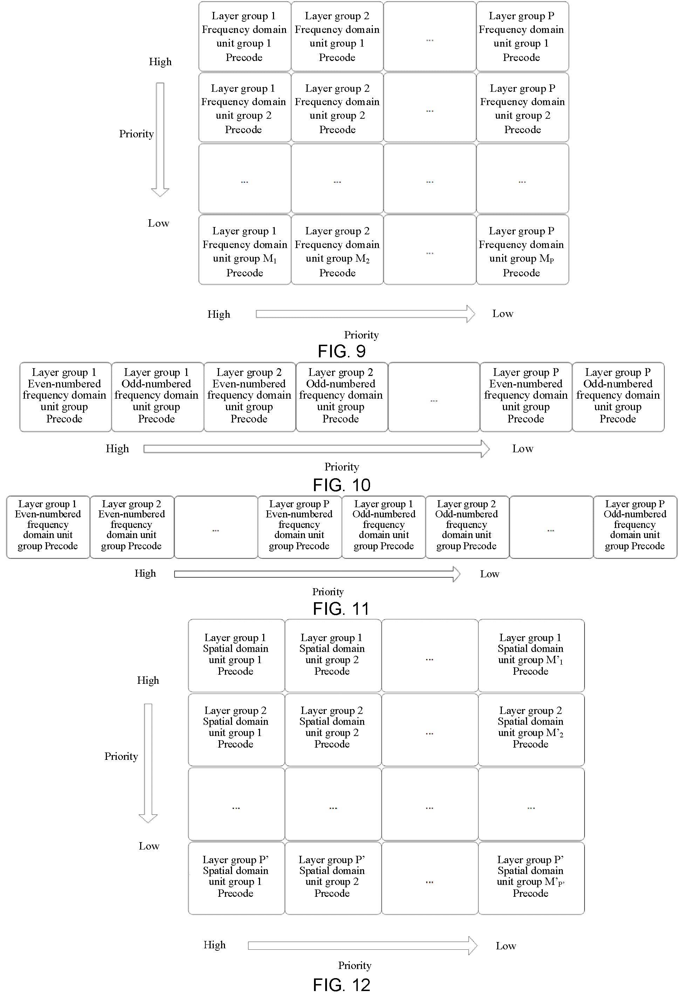

Exemplarily, as shown in FIG. 9, in the arrangement from left to right, the priority of the segment in layer group 1 and frequency domain unit group 1 is higher than the priority of the segment in layer group 2 and frequency domain unit group 1, and the priority of the segment in layer group 2 and frequency domain unit group 1 is higher than the priority of the segment in layer group P and frequency domain unit group 1. In the arrangement from top to bottom, the priority of the segment in layer group 1 and frequency domain unit group 1 is higher than the priority of the segment in layer group 1 and frequency domain unit group 2, and the priority of the segment in layer group 1 and frequency domain unit group 2 is higher than the priority of the segment in layer group 1 and frequency domain unit group $M_1$. A segment in frequency domain unit group 1 and layer group 1 has the highest priority, and a segment in frequency domain unit group $M_P$ and layer group P has the lowest priority.

In some embodiments, a priority of a layer group where a segment is located is higher than a priority of frequency domain information corresponding to the segment, and a segment belonging to a layer group with a lower index has a higher priority than a segment belonging to a layer group with a higher index. In the same layer group, the priority of the segment corresponding to a frequency domain unit belonging to an even-numbered frequency domain unit group is higher than the priority of the segment corresponding to a frequency domain unit belonging to an odd-numbered frequency domain unit group.

Exemplarily, as shown in FIG. 10, the priority of the segment in layer group 1 and even-numbered frequency domain unit group is higher than the priority of the segment in layer group 1 and odd-numbered frequency domain unit group, the priority of the segment in the layer group 1 and odd-numbered frequency domain unit group is higher than the priority of the segment in layer group 2 and even-numbered frequency domain unit group, the priority of the segment in the layer group 2 and even-numbered frequency domain unit group is higher than the priority of the segment in layer group 2 and odd-numbered frequency domain unit group, the priority of the segment in the layer group 2 and odd-numbered frequency domain unit group is higher than the priority of the segment in layer group P and even-numbered frequency domain unit group, and the priority of the segment in the layer group P and even-numbered frequency domain unit group is higher than the priority of the segment in layer group P and odd-numbered frequency domain unit group.

In some embodiments, the priority of the frequency domain information corresponding to a segment is higher than the priority of the layer group where the segment is located, and the priority of the segment corresponding to a frequency domain unit belonging to an even-numbered frequency domain unit group is higher than the priority of the segment corresponding to a frequency domain unit belonging to an odd-numbered frequency domain unit group. In an even-numbered frequency domain unit group, the priority of a segment with a lower index of the layer group where it is located is higher than the priority of a segment with a higher index of the layer group where it is located.

Exemplarily, as shown in FIG. 11, the priority of the segment in layer group 1 and even-numbered frequency domain unit group is higher than the priority of the segment in layer group 2 and even-numbered frequency domain unit group, the priority of the segment in the layer group 2 and even-numbered frequency domain unit group is higher than the priority of the segment in layer group P and even-numbered frequency domain unit group, the priority of the segment in the layer group P and even-numbered frequency domain unit group is higher than the priority of the segment in layer group 1 and odd-numbered frequency domain unit group, the priority of the segment in the layer group 1 and odd-numbered frequency domain unit group is higher than the priority of the segment in layer group 2 and odd-numbered frequency domain unit group, and the priority of the segment in the layer group 2 and odd-numbered frequency domain unit group is higher than the priority of the segment in layer group P and odd-numbered frequency domain unit group.

In some embodiments, the priority of a segment may be determined according to the spatial domain information corresponding to the segment.

Exemplarily, the spatial domain information is also referred to as a spatial domain unit. The spatial domain unit includes the number of ports of an antenna, the number of antennas, and the polarization direction.

In some embodiments, the spatial domain unit may be divided into a spatial domain unit group in polarization direction 1 and a spatial domain unit group in polarization direction 2 according to the polarization direction of the antenna in the spatial domain unit. The priority of a segment may be determined according to the group to which the spatial domain unit corresponding to the segment belongs. Exemplarily, the priority of the segment corresponding to a spatial domain unit belonging to the spatial domain unit group in polarization direction 1 is higher than the priority of the segment corresponding to a spatial domain unit belonging to the spatial domain unit group in polarization direction 2.

In some embodiments, the spatial domain unit may be divided into a plurality of spatial domain unit groups according to the index corresponding to the spatial domain unit. The priority of a segment may be determined according to the spatial domain unit group to which the spatial domain unit corresponding to the segment belongs.

Exemplarily, each spatial domain unit group may include the same number of spatial domain units, or each spatial domain unit group may also include different numbers of spatial domain units. The spatial domain units in each spatial domain unit group may be spatial domain units with consecutive indices, or each spatial domain unit group may also be spatial domain units with non-consecutive indices. The priority of the segment corresponding to a spatial domain unit with a lower group index of the spatial domain unit group to which it belongs is higher than the priority of the segment corresponding to a spatial domain unit with a higher group index of the spatial domain unit group to which it belongs.

In some embodiments, the priority of a segment may be determined according to the layer group where the segment is located and the spatial domain information corresponding to the segment.

In some embodiments, the priority of the layer group where a segment is located is higher than the priority of the spatial domain information corresponding to the segment, and the priority of a segment with a lower index of the layer group where the segment is located is higher than the priority of a segment with a higher index of the layer group where the segment is located. In the same layer group, the priority of the segment corresponding to a spatial domain unit with a lower group index of the spatial domain unit group to which the segment belongs is higher than the priority of the segment corresponding to a spatial domain unit with a higher group index of the spatial domain unit group to which the segment belongs.

Exemplarily, as shown in FIG. 12, in the arrangement from left to right, the priority of the segment in layer group 1 and spatial domain unit group 1 is higher than the priority of the segment in layer group 1 and spatial domain unit group 2, and the priority of the segment in the layer group 1 and spatial domain unit group 2 is higher than the priority of the segment in layer group 1 and spatial domain unit group $M'_1$. In the arrangement from top to bottom, the priority of the segment in layer group 1 and spatial domain unit group 1 is higher than the priority of the segment in layer group 2 and spatial domain unit group 1, and the priority of the segment in the layer group 2 and spatial domain unit group 1 is higher than the priority of the segment in layer group P' and spatial domain unit group 1. The priority of the segment in layer group 1 and spatial domain unit group 1 is the highest, and the priority of the segment in layer group P' and spatial domain unit group M'P' is the lowest.

In some embodiments, the priority of the spatial domain information corresponding to a segment is higher than the priority of the layer group where the segment is located, and the priority of the segment corresponding to a spatial domain unit with a lower group index of the spatial domain unit group to which the segment belongs is higher than the priority of the segment corresponding to a spatial domain unit with a higher group index of the spatial domain unit group to which the segment belongs. In the same spatial domain unit group, the priority of a segment with a lower index of the layer group where the segment is located is higher than the priority of a segment with a higher index of the layer group where the segment is located.

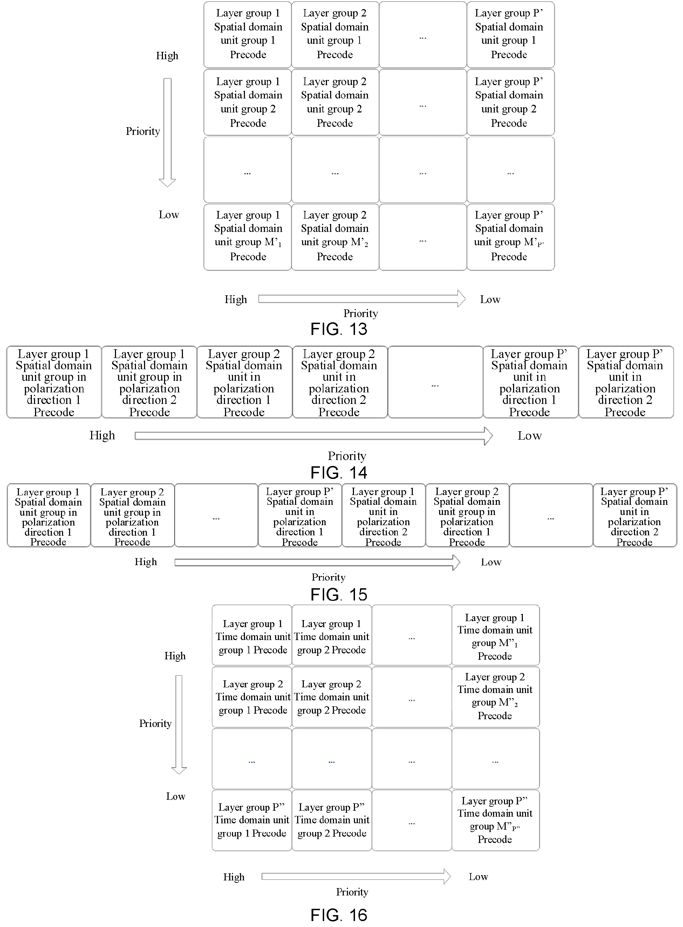

Exemplarily, as shown in FIG. 13, in the arrangement from left to right, the priority of the segment in layer group 1 and spatial domain unit group 1 is higher than the priority of the segment in layer group 2 and spatial domain unit group 1, and the priority of the segment in the layer group 2 and spatial domain unit group 1 is higher than the priority of the segment in layer group P' and spatial domain unit group 1. In the arrangement from top to bottom, the priority of the segment in layer group 1 and spatial domain unit group 1 is higher than the priority of the segment in layer group 1 and spatial domain unit group 2, and the priority of the segment in the layer group 1 and spatial domain unit group 2 is higher than the priority of the segment in layer group 1 and spatial domain unit group $M'_1$. The priority of the segment in layer group 1 and spatial domain unit group 1 is the highest, and the priority of the segment in layer group P' and spatial domain unit group $M'_{P'}$ is the lowest.

In some embodiments, the priority of the layer group where a segment is located is higher than the priority of the spatial domain information corresponding to the segment, and the priority of a segment with a lower index of the layer group where the segment is located is higher than the priority of a segment with a higher index of the layer group where the segment is located. In the same layer group, the priority of the segment corresponding to a spatial domain unit belonging to the spatial domain unit group in polarization direction 1 is higher than the priority of the segment corresponding to a spatial domain unit belonging to the spatial domain unit group in polarization direction 2.

Exemplarily, as shown in FIG. 14, the priority of the segment in layer group 1 and spatial domain unit group in polarization direction 1 is higher than the priority of the segment in layer group 1 and spatial domain unit group in polarization direction 2, the priority of the segment in layer group 1 and spatial domain unit group in polarization direction 2 is higher than the priority of the segment in layer group 2 and spatial domain unit group in polarization direction 1, the priority of the segment in layer group 2 and spatial domain unit group in polarization direction 1 is higher than the priority of the segment in layer group 2 and spatial domain unit group in polarization direction 2, the priority of the segment in layer group 2 and spatial domain unit group in polarization direction 2 is higher than the priority of the segment in layer group P' and spatial domain unit group in polarization direction 1, and the priority of the segment in layer group P' and spatial domain unit group in polarization direction 1 is higher than the priority of the segment in layer group P' and spatial domain unit group in polarization direction 2.

In some embodiments, the priority of the spatial domain information corresponding to a segment is higher than the priority of the layer group where the segment is located, and the priority of the segment corresponding to a spatial domain unit belonging to the spatial domain unit group in polarization direction 1 is higher than the priority of the segment corresponding to a spatial domain unit belonging to the spatial domain unit group in polarization direction 2. In the spatial domain unit group in polarization direction 1, the priority of a segment with a lower index of the layer group where it is located is higher than the priority of a segment with a higher index of the layer group where it is located.

Exemplarily, as shown in FIG. 15, a priority of a segment in a layer group 1 and spatial domain unit group in polarization direction 1 is higher than a priority of a segment in a layer group 2 and spatial domain unit group in polarization direction 1, a priority of a segment in the layer group 2 and spatial domain unit group in polarization direction 1 is higher than a priority of a segment in a layer group P' and spatial domain unit group in polarization direction 1, a priority of a segment in the layer group P' and spatial domain unit group in polarization direction 1 is higher than a priority of a segment in a layer group 1 and spatial domain unit group in polarization direction 2, a priority of a segment in the layer group 1 and spatial domain unit group in polarization direction 2 is higher than a priority of a segment in a layer group 2 and spatial domain unit group in polarization direction 2, a priority of a segment in the layer group 2 and spatial domain unit group in polarization direction 2 is higher than a priority of a segment in a layer group P' and spatial domain unit group in polarization direction 2.

In some embodiments, a priority of a segment may be determined according to time domain information corresponding to the segment.

Exemplarily, the time domain information is also referred to as a time domain unit. A granularity of a time domain unit includes at least one of: an orthogonal frequency-division multiplexing (OFDM) symbol, a slot, a slot block, a subframe, a frame, and a specific time period.

In some embodiments, time domain units may be divided into an even-numbered time domain unit group and an odd-numbered time domain unit group according to indices of the time domain units, and a priority of a segment may be determined according to a group to which a time domain unit corresponding to the segment belongs. Exemplarily, a priority of a segment corresponding to a time domain unit belonging to an odd-numbered time domain unit group is higher than a priority of a segment corresponding to a time domain unit belonging to an even-numbered time domain unit group.

In some embodiments, time domain units may be divided into multiple time domain unit groups according to indices corresponding to the time domain units. A priority of a segment may be determined according to a time domain unit group to which a time domain unit corresponding to the segment belongs.

Exemplarily, each time domain unit group may include a same number of time domain units, or each time domain unit group may also include different numbers of time domain units. Time domain units in each time domain unit group may be consecutive-index time domain units, or each time domain unit group may also be non-consecutive-index time domain units. A priority of a segment corresponding to a time domain unit belonging to a time domain unit group with a lower group index is higher than a priority of a segment corresponding to a time domain unit belonging to a time domain unit group with a higher group index.

In some embodiments, a priority of a segment may be determined according to a layer group where the segment is located and time domain information corresponding to the segment.

In some embodiments, a priority of the layer group where the segment is located is higher than a priority of time domain information corresponding to the segment, and a priority of a segment with a lower index of the layer group where the segment is located is higher than a priority of a segment with a higher index of the layer group where the segment is located. In a same layer group, a priority of a segment corresponding to a time domain unit belonging to a time domain unit group with a lower group index is higher than a priority of a segment corresponding to a time domain unit belonging to a time domain unit group with a higher group index.

Exemplarily, as shown in FIG. 16, in an arrangement from left to right, a priority of a segment in a layer group 1 and time domain unit group 1 is higher than a priority of a segment in a layer group 1 and time domain unit group 2, a priority of a segment in the layer group 1 and time domain unit group 2 is higher than a priority of a segment in a layer group 1 and time domain unit group $M''_1$. In an arrangement from up to down, a priority of a segment in a layer group 1 and time domain unit group 1 is higher than a priority of a segment in a layer group 2 and time domain unit group 1, a priority of a segment in the layer group 2 and time domain unit group 1 is higher than a priority of a segment in a layer group P" and time domain unit group 1. A priority of a segment in the layer group 1 and time domain unit group 1 is highest, and a priority of a segment in a layer group P" and time domain unit group $M''_{P''}$ is lowest.

In some embodiments, a priority of time domain information corresponding to a segment is higher than a priority of a layer group where the segment is located, and a priority of a segment corresponding to a time domain unit belonging to a time domain unit group with a lower group index is higher than a priority of a segment corresponding to a time domain unit belonging to a time domain unit group with a higher group index. In a same time domain unit group, a priority of a segment with a lower index of the layer group where the segment is located is higher than a priority of a segment with a higher index of the layer group where the segment is located.

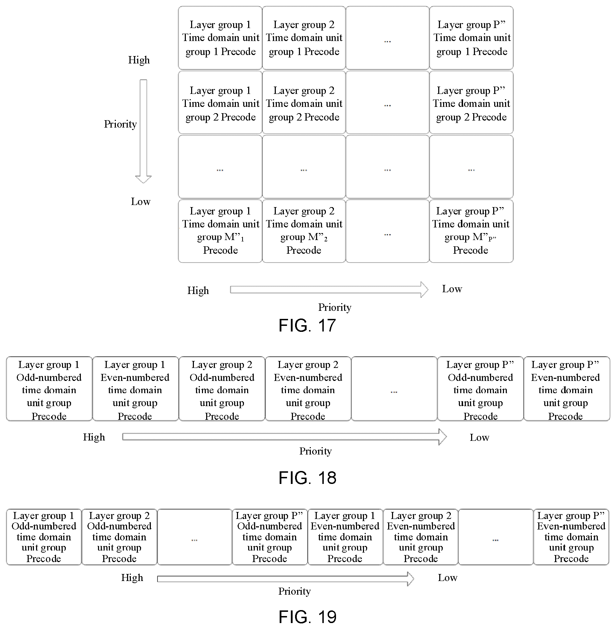

Exemplarily, as shown in FIG. 17, in an arrangement from left to right, a priority of a segment in a layer group 1 and time domain unit group 1 is higher than a priority of a segment in a layer group 2 and time domain unit group 1, a priority of a segment in the layer group 2 and time domain unit group 1 is higher than a priority of a segment in a layer group P" and time domain unit group 1. In an arrangement from up to down, a priority of a segment in a layer group 1 and time domain unit group 1 is higher than a priority of a segment in a layer group 1 and time domain unit group 2, a priority of a segment in the layer group 1 and time domain unit group 2 is higher than a priority of a segment in a layer group 1 and time domain unit group $M''_1$. A priority of a segment in the layer group 1 and time domain unit group 1 is highest, and a priority of a segment in a layer group P" and time domain unit group $M''_{P''}$ is lowest.

In some embodiments, a priority of the layer group where the segment is located is higher than a priority of time domain information corresponding to the segment, and a priority of a segment with a lower index of the layer group where the segment is located is higher than a priority of a segment with a higher index of the layer group where the segment is located. In a same layer group, a priority of a segment corresponding to a time domain unit belonging to an odd-numbered time domain unit group is higher than a priority of a segment corresponding to a time domain unit belonging to an even-numbered time domain unit group.

Exemplarily, as shown in FIG. 18, a priority of a segment in a layer group 1 and odd-numbered time domain unit group is higher than a priority of a segment in a layer group 1 and even-numbered time domain unit group, a priority of a segment in the layer group 1 and even-numbered time domain unit group is higher than a priority of a segment in a layer group 2 and odd-numbered time domain unit group, a priority of a segment in the layer group 2 and odd-numbered time domain unit group is higher than a priority of a segment in a layer group 2 and even-numbered time domain unit group, a priority of a segment in the layer group 2 and even-numbered time domain unit group is higher than a priority of a segment in a layer group P" and odd-numbered time domain unit group, a priority of a segment in the layer group P" and odd-numbered time domain unit group is higher than a priority of a segment in a layer group P" and even-numbered time domain unit group.

In some embodiments, a priority of time domain information corresponding to a segment is higher than a priority of a layer group where the segment is located, and a priority of a segment corresponding to a time domain unit belonging to an even-numbered time domain unit group is higher than a priority of a segment corresponding to a time domain unit belonging to an odd-numbered time domain unit group. In an even-numbered time domain unit group or an odd-numbered time domain unit group, a priority of a segment with a lower index of the layer group where the segment is located is higher than a priority of a segment with a higher index of the layer group where the segment is located.

Exemplarily, as shown in FIG. 19, a priority of a segment in a layer group 1 and odd-numbered time domain unit group is higher than a priority of a segment in a layer group 2 and odd-numbered time domain unit group, a priority of a segment in the layer group 2 and odd-numbered time domain unit group is higher than a priority of a segment in a layer group P" and odd-numbered time domain unit group, a priority of a segment in the layer group P" and odd-numbered time domain unit group is higher than a priority of a segment in a layer group 1 and even-numbered time domain unit group, a priority of a segment in the layer group 1 and even-numbered time domain unit group is higher than a priority of a segment in a layer group 2 and even-numbered time domain unit group, a priority of a segment in the layer group 2 and even-numbered time domain unit group is higher than a priority of a segment in a layer group P" and even-numbered time domain unit group.

In some embodiments, a priority of a segment may be determined according to a layer group where the segment is located, frequency domain information corresponding to the segment, and time domain information corresponding to the segment.

In some embodiments, a priority of time domain information corresponding to a segment is higher than a priority of a layer group where the segment is located, and a priority of the layer group where the segment is located is higher than a priority of frequency domain information corresponding to the segment. A priority of a segment corresponding to a time domain unit belonging to a time domain unit group with a lower group index is higher than a priority of a segment corresponding to a time domain unit belonging to a time domain unit group with a higher group index, and a priority of a segment with a lower index of the layer group where the segment is located is higher than a priority of a segment with a higher index of the layer group where the segment is located. In a same layer group, a priority of a segment corresponding to a frequency domain unit belonging to a frequency domain unit group with a lower group index is higher than a priority of a segment corresponding to a frequency domain unit belonging to a frequency domain unit group with a higher group index.

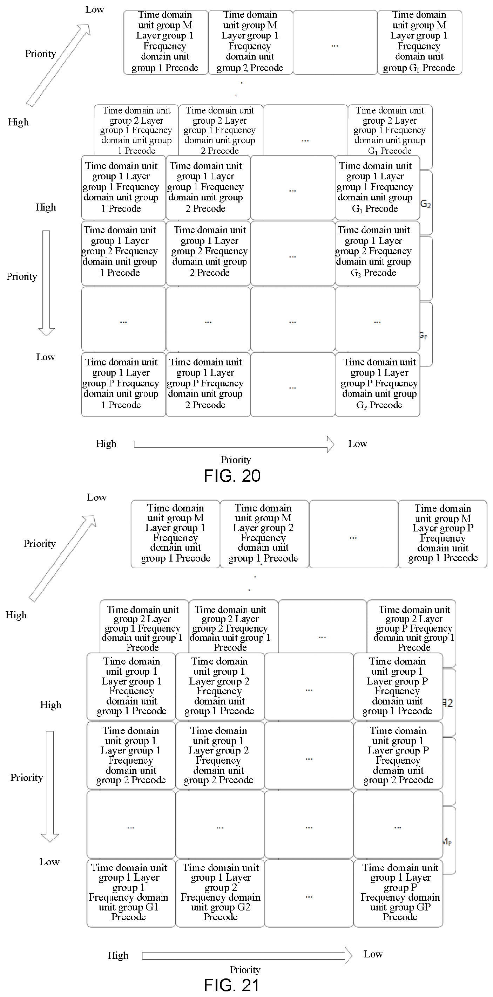

Exemplarily, as shown in FIG. 20, in an arrangement from front to back, a priority of a segment in a time domain unit group 1, layer group 1, and frequency domain unit group 1 is higher than a priority of a segment in a time domain unit group 2, layer group 1, and frequency domain unit group 1, a priority of a segment in the time domain unit group 2, layer group 1, and frequency domain unit group 1 is higher than a priority of a segment in a time domain unit group M, layer group 1, and frequency domain unit group 1. In an arrangement from left to right, a priority of a segment in the time domain unit group 1, layer group 1, and frequency domain unit group 1 is higher than a priority of a segment in a time domain unit group 1, layer group 1, and frequency domain unit group 2, a priority of a segment in the time domain unit group 1, layer group 1, and frequency domain unit group 2 is higher than a priority of a segment in a time domain unit group 1, layer group 1, and frequency domain unit group $G_1$. In an arrangement from up to down, a priority of a segment in the time domain unit group 1, layer group 1, and frequency domain unit group 1 is higher than a priority of a segment in a time domain unit group 1, layer group 2, and frequency domain unit group 1, a priority of a segment in the time domain unit group 1, layer group 2, and frequency domain unit group 1 is higher than a priority of a segment in a time domain unit group 1, layer group P, and frequency domain unit group 1. A priority of a segment in the time domain unit group 1, layer group 1, and frequency domain unit group 1 is highest, and a priority of a segment in a time domain unit group M, layer group P, and frequency domain unit group $G_P$ is lowest.

In some embodiments, a priority of time domain information corresponding to a segment is higher than a priority of frequency domain information corresponding to the segment, and a priority of the frequency domain information corresponding to the segment is higher than a priority of a layer group where the segment is located. For a segment corresponding to a time domain unit that belongs to a time domain unit group with a lower group index, its priority is higher than that of a segment corresponding to a time domain unit that belongs to a time domain unit group with a higher group index. For a segment corresponding to a frequency domain unit that belongs to a frequency domain unit group with a lower group index, its priority is higher than that of a segment corresponding to a frequency domain unit that belongs to a frequency domain unit group with a higher group index. Within the same frequency domain unit group, a segment that belongs to a layer group with a lower index has a higher priority than a segment that belongs to a layer group with a higher index.

For example, as shown in FIG. 21, in an arrangement from front to back, the priority of a segment in time domain unit group 1, layer group 1, and frequency domain unit group 1 is higher than the priority of a segment in time domain unit group 2, layer group 1, and frequency domain unit group 1, and the priority of the segment in time domain unit group 2, layer group 1, and frequency domain unit group 1 is higher than the priority of a segment in time domain unit group M, layer group 1, and frequency domain unit group 1. In an arrangement from left to right, the priority of a segment in time domain unit group 1, layer group 1, and frequency domain unit group 1 is higher than the priority of a segment in time domain unit group 1, layer group 2, and frequency domain unit group 1, and the priority of the segment in time domain unit group 1, layer group 2, and frequency domain unit group 1 is higher than the priority of a segment in time domain unit group 1, layer group P, and frequency domain unit group 1. In a top-to-bottom arrangement, the priority of a segment in time domain unit group 1, layer group 1, and frequency domain unit group 1 is higher than the priority of a segment in time domain unit group 1, layer group 1, and frequency domain unit group 2, which is higher than the priority of a segment in time domain unit group 1, layer group 1, and frequency domain unit group $G_1$. A priority of a segment in the time domain unit group 1 layer group 1 frequency domain unit group 1 is highest, and a priority of a segment in a time domain unit group M layer group P frequency domain unit group $G_P$ is lowest.

In some embodiments, a priority of time domain information corresponding to a segment is higher than a priority of frequency domain information corresponding to the segment, and a priority of the frequency domain information corresponding to the segment is higher than a priority of a layer group where the segment is located. For a segment corresponding to a time domain unit that belongs to a time domain unit group with a lower group index, its priority is higher than that of a segment corresponding to a time domain unit that belongs to a time domain unit group with a higher group index. For a segment corresponding to a frequency domain unit that belongs to an even-numbered frequency domain unit group, its priority is higher than that of a segment corresponding to a frequency domain unit that belongs to an odd-numbered frequency domain unit group. In an even-numbered time domain unit group or an odd-numbered time domain unit group, a priority of a segment with a lower index of the layer group where the segment is located is higher than a priority of a segment with a higher index of the layer group where the segment is located.

In some embodiments, the priority of a segment may be determined according to a layer group to which the segment belongs, spatial domain information corresponding to the segment, and time domain information corresponding to the segment.

In some embodiments, the priority of time domain information corresponding to a segment is higher than the priority of a layer group to which the segment belongs, and the priority of the layer group to which the segment belongs is higher than the priority of spatial domain information corresponding to the segment. For a segment corresponding to a time domain unit that belongs to a time domain unit group with a lower group index, its priority is higher than that of a segment corresponding to a time domain unit that belongs to a time domain unit group with a higher group index. A segment that belongs to a layer group with a lower index has a higher priority than a segment that belongs to a layer group with a higher index. Within the same layer group, for a segment corresponding to a spatial domain unit that belongs to a spatial domain unit group with a lower group index, its priority is higher than that of a segment corresponding to a spatial domain unit that belongs to a spatial domain unit group with a higher group index.

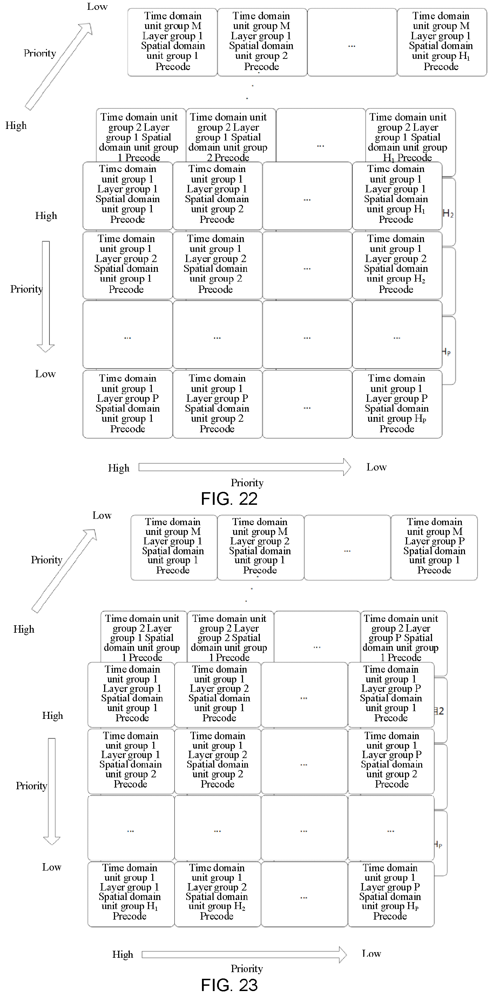

For example, as shown in FIG. 22, in a arrangement from front to back, the priority of a segment in time domain unit group 1, layer group 1, and spatial domain unit group 1 is higher than the priority of a segment in time domain unit group 2, layer group 1, and spatial domain unit group 1, and the priority of the segment in time domain unit group 2, layer group 1, and spatial domain unit group 1 is higher than the priority of a segment in time domain unit group M, layer group 1, and spatial domain unit group 1. In a arrangement from left to right, the priority of a segment in time domain unit group 1, layer group 1, and spatial domain unit group 1 is higher than the priority of a segment in time domain unit group 1, layer group 1, and spatial domain unit group 2, and the priority of the segment in time domain unit group 1, layer group 1, and spatial domain unit group 2 is higher than the priority of a segment in time domain unit group 1, layer group 1, and spatial domain unit group $H_1$. In an arrangement from top to bottom, the priority of a segment in time domain unit group 1, layer group 1, and spatial domain unit group 1 is higher than the priority of a segment in time domain unit group 1, layer group 2, and spatial domain unit group 1, and the priority of the segment in time domain unit group 1, layer group 2, and spatial domain unit group 1 is higher than the priority of a segment in time domain unit group 1, layer group P, and spatial domain unit group 1. A segment in time domain unit group 1, layer group 1, and spatial domain unit group 1 has the highest priority, and a segment in time domain unit group M, layer group P, and spatial domain unit group $H_P$ has the lowest priority.

In some embodiments, the priority of time domain information corresponding to a segment is higher than the priority of spatial domain information corresponding to the segment, and the priority of the spatial domain information corresponding to the segment is higher than the priority of a layer group to which the segment belongs. For a segment corresponding to a time domain unit that belongs to a time domain unit group with a lower group index, its priority is higher than that of a segment corresponding to a time domain unit that belongs to a time domain unit group with a higher group index. For a segment corresponding to a spatial domain unit that belongs to a spatial domain unit group with a lower group index, its priority is higher than that of a segment corresponding to a spatial domain unit that belongs to a spatial domain unit group with a higher group index. Within the same spatial domain unit group, a segment that belongs to a layer group with a lower index has a higher priority than a segment that belongs to a layer group with a higher index.

For example, as shown in FIG. 23, in a arrangement from front to back, the priority of a segment in time domain unit group 1, layer group 1, and spatial domain unit group 1 is higher than the priority of a segment in time domain unit group 2, layer group 1, and spatial domain unit group 1, and the priority of the segment in time domain unit group 2, layer group 1, and spatial domain unit group 1 is higher than the priority of a segment in time domain unit group M, layer group 1, and spatial domain unit group 1. In a arrangement from left to right, the priority of a segment in time domain unit group 1, layer group 1, and spatial domain unit group 1 is higher than the priority of a segment in time domain unit group 1, layer group 2, and spatial domain unit group 1, and the priority of the segment in time domain unit group 1, layer group 2, and spatial domain unit group 1 is higher than the priority of a segment in time domain unit group 1, layer group P, and spatial domain unit group 1. In an arrangement from top to bottom, the priority of a segment in time domain unit group 1, layer group 1, and spatial domain unit group 1 is higher than the priority of a segment in time domain unit group 1, layer group 1, and spatial domain unit group 2, and the priority of the segment in time domain unit group 1, layer group 1, and spatial domain unit group 2 is higher than the priority of a segment in time domain unit group 1, layer group 1, and spatial domain unit group $H_1$. A segment in time domain unit group 1, layer group 1, and spatial domain unit group 1 has the highest priority, and a segment in time domain unit group M, layer group P, and spatial domain unit group $H_P$ has the lowest priority.

In some embodiments, the priority of time domain information corresponding to a segment is higher than the priority of spatial domain information corresponding to the segment, and the priority of the spatial domain information corresponding to the segment is higher than the priority of a layer group to which the segment belongs. For a segment corresponding to a time domain unit that belongs to a time domain unit group with a lower group index, its priority is higher than that of a segment corresponding to a time domain unit that belongs to a time domain unit group with a higher group index. For a segment corresponding to a spatial domain unit that belongs to a spatial domain unit group in polarization direction 1, its priority is higher than that of a segment corresponding to a spatial domain unit that belongs to a spatial domain unit group in polarization direction 2. In a spatial domain unit group in polarization direction 1 or a spatial domain unit group in polarization direction 2, a segment that belongs to a layer group with a lower index has a higher priority than a segment that belongs to a layer group with a higher index.

In some embodiments, the priority of a segment may be determined according to a quantization manner for the segment.

For example, a segment in part 2 CSI of a CSI report may be a precode/a precoding matrix obtained through processing by a CSI processing unit. The processing manner of a CSI processing unit includes a codebook processing manner and an artificial intelligence/machine learning model processing manner, which are used to quantize a precoding element in a segment into a bit sequence.

A quantization manner includes a quantization type and/or a quantization precision. A quantization type includes a scalar quantization type and a vector quantization type. A scalar quantization type includes a uniform scalar quantization type and a non-uniform scalar quantization type.

In some embodiments, the priority of a segment may be determined according to a quantization type of the segment.

For example, the priority of a segment whose quantization type is a vector quantization type is higher than the priority of a segment whose quantization type is a non-uniform scalar quantization type, and the priority of a segment whose quantization type is a non-uniform scalar quantization type is higher than the priority of a segment whose quantization type is a uniform scalar quantization type; or, the priority of a segment whose quantization type is a vector quantization type is higher than the priority of a segment whose quantization type is a uniform scalar quantization type, and the priority of a segment whose quantization type is a uniform scalar quantization type is higher than the priority of a segment whose quantization type is a non-uniform scalar quantization type; or, the priority of a segment whose quantization type is a non-uniform scalar quantization type is higher than the priority of a segment whose quantization type is a uniform scalar quantization type, and the priority of a segment whose quantization type is a uniform scalar quantization type is higher than the priority of a segment whose quantization type is a vector quantization type; or, the priority of a segment whose quantization type is a uniform scalar quantization type is higher than the priority of a segment whose quantization type is a non-uniform scalar quantization type, and the priority of a segment whose quantization type is a non-uniform scalar quantization type is higher than the priority of a segment whose quantization type is a vector quantization type.

In some embodiments, the priority of a segment may be determined according to a quantization precision of the segment. The quantization precision is a quantization bit number of a precoding element in a segment.

It can be understood that a higher quantization precision requires a higher quantization bit overhead. When the precoding element values in a segment are lower, using a higher quantization precision may cause extra quantization bit overhead; therefore, a lower quantization precision may be considered for quantization, and the quantization error will not be too higher. To reduce quantization bit overhead, it is set that the quantization precision of a segment has a positive correlation relationship with the precoding element values in the segment; the lower the precoding element values in the segment, the lower the quantization precision; the higher the precoding element values in the segment, the higher the quantization precision. The priority of a segment with higher quantization precision is higher than the priority of a segment with low quantization precision.

For example, after a CSI report is processed by a CSI processing unit, part 2 CSI in the CSI report includes 50 segments; 25 segments have a quantization precision of 3-bit quantization, and 25 segments have a quantization precision of 1-bit quantization; then the priority of the 25 segments with 3-bit quantization is higher than the priority of the 25 segments with 1-bit quantization.

It should be noted that the quantization pattern needs to be fed back to the base station together in the form of a bitmap for subsequent dequantization, and its overhead is equal to the number of elements in the CSI report. The bitmap is used to indicate the locations of elements with low/high quantization precision. For example, taking the elements in the CSI report as 1001110001..01 (50 bits) as an example, 1 indicates the element location with low/high quantization precision, and 0 indicates the element location with high/low quantization precision.

In some embodiments, the priority of a segment is determined according to the processing model for the CSI report to which the segment belongs or the precoding information in the CSI report.

For example, different parts in the CSI report or the precoding information in the CSI report may be obtained through different artificial intelligence/machine learning processing models. For example, the processing model may be a layer common-rank common model (i.e., a combination model of a layer common model and a rank common model), a layer common-rank specific model (i.e., a combination model of a layer common model and a rank specific model), a layer specific-rank common model (i.e., a combination model of a layer specific model and a rank common model), a layer common model, a rank specific model, and a rank common model.

As another example, the priority of a CSI report or precoding information in a CSI report with a processing model being a layer common-rank common model, a Layer common-Rank specific model, or a layer specific-rank common model is higher than the priority of a CSI report or precoding information in a CSI report with a processing model being a rank specific model or a rank common model; that is, the priority of a segment whose CSI report or precoding information in the CSI report with a processing model being a layer common-rank common model, a layer common-rank specific model, or a layer specific-rank common model is higher than the priority of a segment whose CSI report or precoding information in the CSI report with a processing model of a Rank specific model or a Rank common model; or the priority of a CSI report or precoding information in a CSI report with a processing model being a Rank specific model or a Rank common model is higher than the priority of a CSI report or precoding information in a CSI report with a processing model being a layer common-rank common model, a layer common-rank specific model, or a layer specific-rank common model; that is, the priority of a segment whose CSI report or precoding information in the CSI report with a processing model being a rank specific model or a rank common model is higher than the priority of a segment whose CSI report or precoding information in the CSI report with a processing model being a layer common-rank common model, a layer common-rank specific model, or a layer specific-rank common model. The priority of a CSI report or precoding information in a CSI report with a processing model being a layer common model is higher than the priority of a CSI report or precoding information in a CSI report with a processing model being a rank specific model or a rank common model; that is, the priority of a segment whose CSI report or precoding information in the CSI report with a processing model being a layer common model is higher than the priority of a segment whose CSI report or precoding information in the CSI report with a processing model being a rank specific model or a rank common model.

It should be noted that the determination method for the priority of a segment may be selected as one or a combination of multiple determination methods according to actual situations, and is not limited to the determination method for the priority of a segment described in the embodiments of the present disclosure. Moreover, in the determination method for the priority of a segment, the higher or lower priority of the segment may also be determined according to actual situations. For example, in the embodiments provided in the present disclosure, the priority of a segment corresponding to a frequency domain unit whose group is an even-numbered frequency domain unit group is higher than the priority of a segment corresponding to a frequency domain unit whose group is an odd-numbered frequency domain unit group; it may also be adjusted according to actual situations so that the priority of a segment corresponding to a frequency domain unit whose group is an odd-numbered frequency domain unit group is higher than the priority of a segment corresponding to a frequency domain unit whose group is an even-numbered frequency domain unit group, which is not limited in the present disclosure; similarly, for the determination methods for the priority of other segments in the present disclosure and the determination methods for the priority of segments in multiple CSI reports, the present disclosure does not elaborate here.

In some embodiments, transmitting the segment in the second-part CSI of the CSI report based on the priority of the segment in the second-part CSI of the CSI report, for example, may be implemented as the following operations: in response to that a transmission resource does not support transmitting all segments in the second-part CSI of the CSI report, transmitting a segment with a higher priority in the second-part CSI of the CSI report, and discarding or not transmitting a segment with a lower priority.

For example, taking a schematic diagram of segments in part 2 CSI of the CSI report shown in FIG. 6 as an example, there are a total of M groups; in a case that transmission resources only support segments in group 1 and group 2 in FIG. 6, segments in group 1 and group 2 are transmitted, and segments in the remaining (M-2) groups are discarded.

In some embodiments, in a case that a number of CSI reports is multiple, transmitting the CSI reports, for example, may be implemented as the following operations.

Segments in part 2 CSIs of the multiple CSI reports are transmitted based on priorities of the segments in the part 2 CSIs of the multiple CSI reports.

The priority of a segment is determined according to the identifier of the CSI report to which the segment belongs and the characteristics of the segment. The characteristics of the segment include at least one of the following: the layer to which the segment belongs, the layer group where the segment is located, the frequency domain information corresponding to the segment, the time domain information corresponding to the segment, the spatial domain information corresponding to the segment, and the quantization manner for the segment. For example, the identifier of the CSI report to which the segment belongs may be the identity document (ID) of the CSI report to which the segment belongs.

In some embodiments, the priority of a segment is determined according to the identifier of the CSI report to which the segment belongs and the layer to which the segment belongs.

In some embodiments, the priority of the identifier of the CSI report to which the segment belongs is higher than the priority of the layer to which the segment belongs. A priority of a segment with a lower ID of a CSI report to which the segment belongs is higher than a priority of a segment with a higher ID of a CSI report to which the segment belongs. Among multiple segments whose CSI report is the same CSI report, a priority of a segment belonging to a layer with a lower index is higher than a priority of another segment belonging to another layer with a higher index.

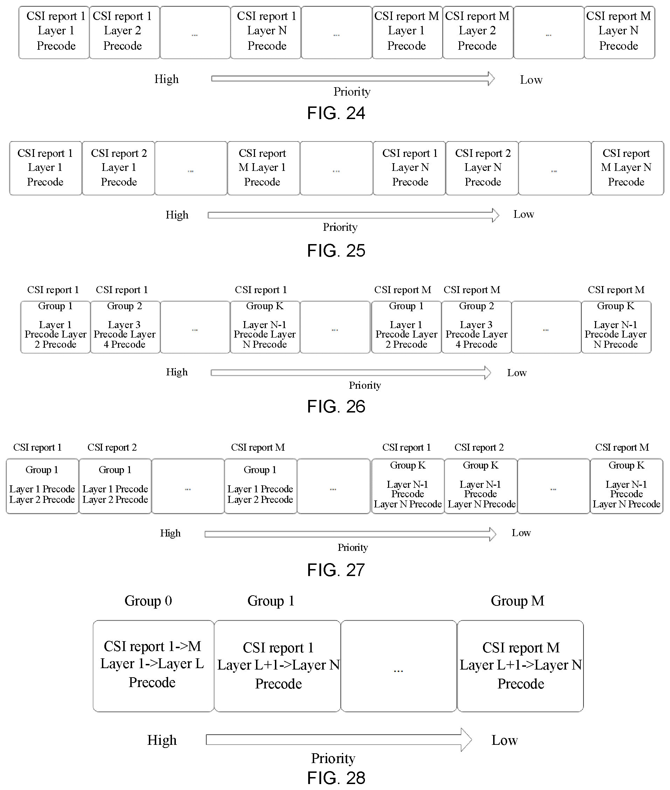

For example, as shown in FIG. 24, a priority of a segment in CSI report 1 and layer 1 is higher than a priority of a segment in CSI report 1 and layer 2, and is also higher than a priority of a segment in CSI report 1 and layer N; a priority of a segment in CSI report 1 and layer N is higher than a priority of a segment in CSI report M and layer 1; a priority of a segment in CSI report M and layer 1 is higher than a priority of a segment in CSI report M and layer 2; and a priority of a segment in CSI report M and layer 2 is higher than a priority of a segment in CSI report M layer N.

In some embodiments, the priority of the layer to which the segment belongs is higher than the priority of the identifier of the CSI report to which the segment belongs. A priority of a segment belonging to a layer with a lower index is higher than a priority of another segment belonging to another layer with a higher index. Among multiple segments that belong to the same layer, the priority of a segment with a lower ID of the CSI report to which it belongs is higher than the priority of a segment with a higher ID of the CSI report to which it belongs.

For example, as shown in FIG. 25, a priority of a segment in layer 1 and a CSI report 1 is higher than a priority of a segment in layer 1 and a CSI report 2, the priority of the segment in layer 1 and the CSI report 2 is higher than a priority of a segment in layer 1 and a CSI report M, the priority of the segment in layer 1 and the CSI report M is higher than a priority of a segment in layer N and the CSI report 1, the priority of the segment in layer N and the CSI report 1 is higher than a priority of a segment in layer N and the CSI report 2, and the priority of the segment in layer N v the CSI report 2 is higher than a priority of a segment in layer N and the CSI report M.

In some embodiments, a priority of a segment is determined according to an identifier of a CSI report to which the segment belongs and a layer group at which the segment is located.

In some embodiments, a priority of an identifier of a CSI report to which a segment belongs is higher than a priority of a layer group to which the segment belongs. A priority of a segment with a lower ID of a CSI report to which the segment belongs is higher than a priority of a segment with a higher ID of a CSI report to which the segment belongs. Among multiple segments belonging to the same CSI report, a priority of a segment with a lower group index of a layer group to which the segment belongs is higher than a priority of a segment with a higher group index of a layer group to which the segment belongs.

For example, as shown in FIG. 26, taking that each group includes two layers as an example, a priority of a segment in group 1 and the CSI report 1 is higher than a priority of a segment in group 2 and the CSI report 1, the priority of the segment in group 2 and the CSI report 1 is higher than a priority of a segment in group K and the CSI report 1, the priority of the segment in group K and the CSI report 1 is higher than a priority of a segment in group 1 and a CSI report M, the priority of the segment in group 1 and the CSI report M is higher than a priority of a segment in group 2 and the CSI report M, and the priority of the segment in group 2 and the CSI report M is higher than a priority of a segment in group K and the CSI report M.

In some embodiments, a priority of a layer group to which a segment belongs is higher than a priority of an identifier of a CSI report to which the segment belongs. A priority of a segment with a lower group index of a layer group to which the segment belongs is higher than a priority of a segment with a higher group index of a layer group to which the segment belongs. Among multiple segments belonging to the same layer group, a priority of a segment with a lower ID of a CSI report to which the segment belongs is higher than a priority of a segment with a higher ID of a CSI report to which the segment belongs.

For example, as shown in FIG. 27, taking that each group includes two layers as an example, a priority of a segment in group 1 and the CSI report 1 is higher than a priority of a segment in group 1 and the CSI report 2, the priority of the segment in group 1 and the CSI report 2 is higher than a priority of a segment in group 1 and the CSI report M, the priority of the segment in group 1 and the CSI report M is higher than a priority of a segment in group K and the CSI report 1, the priority of the segment in group K and the CSI report 1 is higher than a priority of a segment in group K and the CSI report 2, and the priority of the segment in group K and the CSI report 2 is higher than a priority of a segment in group K and the CSI report M.

In some embodiments, layer 1 to layer L among M CSI reports are divided into one group, and layer (L+1) to layer N in each CSI report are divided into one group, where N is greater than or equal to L, and L is greater than or equal to 1. A priority of a layer group to which a segment belongs is higher than a priority of an identifier of a CSI report to which the segment belongs. A priority of a segment with a lower group index of a layer group to which the segment belongs is higher than a priority of a segment with a higher group index of a layer group to which the segment belongs.

For example, as shown in FIG. 28, a priority of a segment in group 0 is higher than a priority of a segment in group 1, and the priority of the segment in group 1 is higher than a priority of a segment in group M.

In some embodiments, layer 1 to layer L among M CSI reports are divided into one group, and layer (L+1) to layer N in each CSI report are divided into Q groups, where N is greater than or equal to L, and L is greater than or equal to 1. A priority of an identifier of a CSI report to which a segment belongs is higher than a priority of a layer group to which the segment belongs. A priority of a segment with a lower ID of a CSI report to which the segment belongs is higher than a priority of a segment with a higher ID of a CSI report to which the segment belongs.

In some embodiments, each layer among multiple layers in each CSI report among multiple CSI reports may be divided into multiple groups. A priority of a segment with a lower group index of a layer group to which the segment belongs is higher than a priority of a segment with a higher group index of a layer group to which the segment belongs.

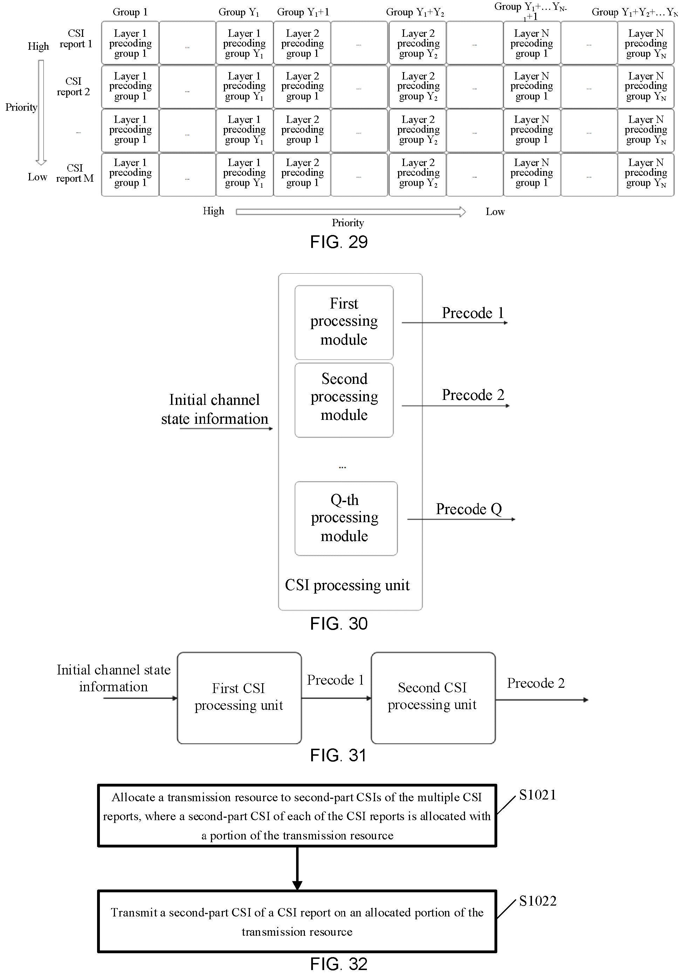

For example, as shown in FIG. 29, each layer among N layers in each CSI report is divided into Y groups, and N layers in each CSI report are divided into $Y_1, Y_2, ...Y_N$ groups in total. In an arrangement from top to bottom, in group 1, a priority of layer 1, group 1, and the CSI report 1 is higher than a priority of layer 1, group 1, and the CSI report M. In an arrangement from left to right, in the CSI report 1, a priority of group 1, layer 1, and group 1 is higher than a priority of group $Y_1$, layer 1, and group $Y_1$, a priority of group $Y_1$, layer 1, and group $Y_1$ is higher than a priority of group $Y_1+1$, layer 2, and group 1, a priority of group $Y_1+1$, layer 2, and group 1 is higher than a priority of group $(Y_1+Y_2)$, layer 2, and group $Y_2$, a priority of group $(Y_1+Y_2)$, layer 2, and group $Y_2$ is higher than a priority of group $(Y_1+...+Y_{N-1}+1)$, and layer N, group 1, and a priority of group $(Y_1+...+Y_{N-1}+1)$, layer N, group 1 is higher than a priority of group $(Y_1+Y_2+...+Y_N)$, layer N, and group $Y_N$.

In some embodiments, a priority of a segment is determined according to an identifier of a CSI report to which the segment belongs and frequency domain information corresponding to the segment.

For example, a priority of a segment in an even-numbered frequency domain unit group and in a CSI report 1 is higher than a priority of a segment in an odd-numbered frequency domain unit group and in the CSI report 1, the priority of the segment in the odd-numbered frequency domain unit group and in the CSI report 1 is higher than a priority of a segment in an even-numbered frequency domain unit group and in a CSI report 2, and the priority of the segment in the even-numbered frequency domain unit group and in the CSI report 2 is higher than a priority of a segment in an odd-numbered frequency domain unit group and in the CSI report 2.

As yet another example, a priority of a segment in frequency domain unit group 1 and in a CSI report 1 is higher than a priority of a segment in frequency domain unit group 1 and in a CSI report 2, the priority of the segment in frequency domain unit group 1 and in the CSI report 2 is higher than a priority of a segment in frequency domain unit group 1 and in a CSI report M, the priority of the segment in frequency domain unit group 1 and in the CSI report M is higher than a priority of a segment in frequency domain unit group 2 and in the CSI report 1, the priority of the segment in frequency domain unit group 2 and in the CSI report 1 is higher than a priority of a segment in frequency domain unit group 2 and in the CSI report M, the priority of the segment in frequency domain unit group 2 and in the CSI report M is higher than a priority of a segment in frequency domain unit group R and in the CSI report 1, and the priority of the segment in frequency domain unit group R and in the CSI report 1 is higher than a priority of a segment in frequency domain unit group R and in the CSI report M.

In some embodiments, a priority of a segment is determined according to an identifier of a CSI report to which the segment belongs and spatial domain information corresponding to the segment.

For example, a priority of a segment in a spatial domain unit group in polarization direction 1 and in a CSI report 1 is higher than a priority of a segment in a spatial domain unit group in polarization direction 2 and in the CSI report 1, the priority of the segment in the spatial domain unit group in polarization direction 2 and in the CSI report 1 is higher than a priority of a segment in a spatial domain unit group in polarization direction 1 and in a CSI report 2, the priority of the segment in the spatial domain unit group in polarization direction 1 and in the CSI report 2 is higher than a priority of a segment in a spatial domain unit group in polarization direction 2 and in the CSI report 2, the priority of the segment in the spatial domain unit group in polarization direction 2 and in the CSI report 2 is higher than a priority of a segment in a spatial domain unit group in polarization direction 1 and in a CSI report M, and the priority of the segment in the spatial domain unit group in polarization direction 1 and in the CSI report M is higher than a priority of a segment in a spatial domain unit group in polarization direction 2 and in the CSI report M.

As yet another example, a priority of a segment in spatial domain unit group 1 and in a CSI report 1 is higher than a priority of a segment in spatial domain unit group 1 and in a CSI report 2, the priority of the segment in spatial domain unit group 1 and in the CSI report 2 is higher than a priority of a segment in spatial domain unit group 1 and in a CSI report M, the priority of the segment in spatial domain unit group 1 and in the CSI report M is higher than a priority of a segment in spatial domain unit group 2 and in the CSI report 1, the priority of the segment in spatial domain unit group 2 and in the CSI report 1 is higher than a priority of a segment in spatial domain unit group 2 and in the CSI report M, the priority of the segment in spatial domain unit group 2 and in the CSI report M is higher than a priority of a segment in spatial domain unit group P and in the CSI report 1, and the priority of the segment in spatial domain unit group P and in the CSI report 1 is higher than a priority of a segment in spatial domain unit group P and in the CSI report M.

In some embodiments, a priority of a segment is determined according to an identifier of a CSI report to which the segment belongs and time domain information corresponding to the segment.

Exemplarily, a priority of a segment in time domain unit group 1 and CSI report 1, a priority of a segment in time domain unit group 1 and CSI report 1 is higher than a priority of a segment in time domain unit group 2 and CSI report 1; a priority of a segment in time domain unit group 2 and CSI report 1 is higher than a priority of a segment in time domain unit group I and CSI report 1; a priority of a segment in time domain unit group I of CSI report 1 is higher than a priority of a segment in time domain unit group 1 of CSI report 2; a priority of a segment in time domain unit group 1 and CSI report 2 is higher than a priority of a segment in time domain unit group I and CSI report 2; a priority of a segment in time domain unit group I and CSI report 2 is higher than a priority of a segment in time domain unit group 1 and CSI report M; and a priority of a segment in time domain unit group 1 and CSI report M is higher than a priority of a segment in time domain unit group I and CSI report M.

As another example, a priority of a segment in time domain unit group 1 and CSI report 1 is higher than a priority of a segment in time domain unit group 1 and CSI report 2; a priority of a segment in time domain unit group 1 and CSI report 2 is higher than a priority of a segment in time domain unit group 1 and CSI report M; a priority of a segment in time domain unit group 1 and CSI report M is higher than a priority of a segment in time domain unit group 2 and CSI report 1; and a priority of a segment in time domain unit group 2 and CSI report 1 is higher than a priority of a segment in time domain unit group 2 and CSI report M.

In some embodiments, a priority of a segment is determined based on a priority of a CSI report to which the segment belongs.

In some embodiments, a priority of a CSI report may be determined based on a processing model for the CSI report or the precoding information in the CSI report.

Exemplarily, a CSI report or precoding information in the CSI report may be obtained based on different artificial intelligence/machine learning processing models. For example, the processing model may be a layer common-rank common model, a layer common-rank specific model, a layer specific-rank common model, a rank specific model, or a rank common model.

As another example, a priority of a CSI report with a processing model being the layer common-rank common model, the layer common-rank specific model, or the layer specific-rank common model is higher than a priority of a CSI report with a processing model being the rank specific model or the rank common model. That is, a priority of a segment of a CSI report with a processing model being the layer common-rank common model, the layer common-rank specific model, or the layer specific-rank common model is higher than a priority of a segment of CSI report with a processing model being the rank specific model or the rank common model.

Thus, the priority of the contents in the CSI report is determined in various ways, and then during the transmission process, the contents in the CSI report with a higher priority is transmitted preferentially, so as to improve the importance of the content in the feedback CSI.

In some embodiments, based on the priorities of the segments in part 2 CSI of multiple CSI reports, the segments in part 2 CSI of multiple CSI reports are transmitted, which may be implemented as the following operations: in a case that the transmission resource does not support transmitting all segments in part 2 CSI of multiple CSI reports, segments with higher priorities in part 2 CSI of multiple CSI reports are transmitted, and segments with lower priorities are discarded or not transmitted.

Exemplarily, taking the schematic diagram of the segments in part 2 CSI of multiple CSI reports in FIG. 28 as an example, in a case that the transmission resource only supports transmitting 2 groups, the segments in group 0 and group 1 are transmitted, and the segments in other groups are discarded.

In some embodiments, before transmitting the CSI report, the following operations are further included: adjusting a number of elements in the CSI report or precoding information in the CSI report, to make a bit overhead of the CSI report meet a constraint requirement of a transmission resource.

In some embodiments, the number of elements in the CSI report or the precoding information in the CSI report may be adjusted by adjusting the compression ratio or compression coefficient of the CSI report or the precoding information in the CSI report, to make a bit overhead of the second-part CSI of the CSI report meet a constraint requirement of a transmission resource.

It should be noted that the CSI report or the precoding information in the CSI is obtained by performing precoding processing on the CSI. Taking that the CSI includes K elements as an example, the CSI report or the CSI precoding information obtained after precoding processing includes K' elements, then the compression ratio is defined as K'/K, and the compression coefficient is defined as K/K'.

Exemplarily, as shown in FIG. 30, taking that the initial channel state information CSI includes 500 elements as an example, after passing through the first processing module in the CSI processing unit, the obtained precoding matrix indicator (precoding matrix indicator, PMI) (referred to as precode) 1 includes 50 elements, the compression ratio in the first processing module is 1/10, the compression coefficient is 10, and taking the quantization precision of each element as 3 bits per element as an example, a total of 150 bits of overhead is required. To guarantee that the bit overhead of the CSI report meets the constraint requirement of the transmission resource, the initial state information may be processed using a second processing module with a lower compression ratio and a higher compression coefficient in the CSI processing unit. After processing, the generated precode 2 includes 20 elements, the compression ratio in the second processing module is 1/25, the compression coefficient is 25, and taking the quantization precision of each element as 3 bits per element as an example, a total of 60 bits of overhead is required.

As another example, as shown in FIG. 31, precoding processing may be performed on initial state information through multiple CSI processing units to meet the constraint requirement of the transmission resource. Taking that the initial channel state information includes 500 elements as an example, after the 500 elements are processed by a first CSI processing unit with a compression ratio of 1/10 or a compression coefficient of 10, an obtained precode 1 includes 50 elements, and taking the quantization precision as 3 bits per element as an example, a total of 150 bits of overhead is required, which does not meet the constraint requirement of the transmission resource at this time. Furthermore, precode 1 is further processed by a second CSI processing unit with a compression ratio of 1/5 or a compression coefficient of 5 to obtain precode 2, which includes 10 elements, and taking the quantization precision as 3 bits per element as an example, a total of 30 bits of overhead is required.

In practical application, according to the constraint requirement of the transmission resource, different compression ratios or different compression coefficients may be used to process the initial channel state information to meet the constraint requirement of the transmission resource and guarantee the integrity of the CSI report as much as possible. The manner in which elements in the CSI are mapped to quantization bits may be a vector quantization manner, or a uniform quantization manner or a non-uniform quantization manner in a scalar quantization manner.

In some embodiments, the number of bits in the quantized bit sequence may be determined through a vector quantization manner.

Exemplarily, the segment size of elements in the precoding information may be determined through a vector quantization manner, or the size of the vector quantization codebook may be determined through a vector quantization manner, or the length of the codeword in the vector quantization codebook may be determined through a vector quantization manner, or the number of codewords in the vector quantization codebook may be determined through a vector quantization manner, or the index of the codeword in the vector quantization codebook may be determined through a vector quantization manner, or the index of the vector quantization codebook may be determined through a vector quantization manner, or the parameter of the vector quantization codebook may be determined through a vector quantization manner, to further determine the number of bits in the quantized bit sequence.

It should be noted that the above determination of the number of bits in the quantized bit sequence may be determined through one or multiple items in the above examples or other determination methods not described in the examples, which is not limited in the present disclosure, and which may be set according to actual situations. The related content of the scalar quantization manner and the vector quantization manner described in the present disclosure may be configured by the second communication node, or may be configured by the first communication node, and the detailed configuration situation is reported to the second communication node, which is not limited in the present disclosure.

In some embodiments, adjusting the number of elements in the CSI report or the precoding information in the CSI report may be implemented as the following operations.

The elements or bits in part 2 CSI of the CSI report are punctured or discarded, to make a bit overhead of the second-part CSI of the CSI report meet a constraint requirement of a transmission resource.

As an implementation manner, a elements or bit in part 2 CSI of the CSI report is punctured or discarded based on a preset pattern.

Exemplarily, the preset pattern may be a quantization bit pattern corresponding to or mapped from L elements with odd indices in part 2 CSI of the CSI report. Alternatively, the preset pattern may also be L elements with even indices in the part 2 CSI of the CSI report or a quantization bit pattern corresponding to/mapped to the elements. Alternatively, the preset pattern may also be L elements with indices from S to S-L+1 in the part 2 CSI of the CSI report or a quantization bit pattern corresponding to/mapped to the elements. Alternatively, the preset pattern may also be the first L/2 and the last L/2 elements in the part 2 CSI of the CSI report or a quantization bit pattern corresponding to/mapped to the elements, specifically, L elements with indices being $\lfloor L/2 - 1 \rfloor$, and from $\lfloor S - L/2 + 1 \rfloor$ to S (where $\lfloor$ is a floor function), or, L elements with indices being from 0 to $\lceil L/2 - 1 \rceil$, and from $\lceil S - L/2 + 1 \rceil$ to S (where $\lceil$ is a ceil function). Alternatively, the preset pattern may also be random or specific L elements in the part 2 CSI of the CSI report. L and S are positive integers, where the index of the first element in the part 2 CSI of the CSI report is 0, and the index of the last element is S. The method for corresponding to/mapping the elements in the part 2 CSI of the CSI report to quantization bits may be a vector quantization manner, or a uniform quantization manner or a non-uniform quantization manner in a scalar quantization manner. In an actual application process, the preset pattern may be determined according to actual situations, which is not limited in the present disclosure.

As another example, taking the preset pattern as 5 elements with odd indices in the CSI report as an example, elements with indices 1, 3, 5, 7, 9 in the part 2 CSI of the CSI report may be punctured or discarded, or elements with indices 11, 13, 15, 17, 19 in the part 2 CSI of the CSI report may be punctured or discarded.

In this way, by adjusting the compression ratio/compression coefficient and based on the preset pattern method, the number of elements in the CSI report or the precoding information in the CSI report is adjusted, so that the bit overhead of the CSI report or the precoding information in the CSI report meets the constraint of the transmission resource, to transmit as much content in the CSI report as possible.

In some embodiments, as shown in FIG. 32, in a case that a number of CSI reports is multiple, sending the CSI reports may be implemented as the following operations.

In S1021, a transmission resource is allocated to part 2 CSIs of the multiple CSI reports, where a part 2 CSI of each of the CSI reports is allocated with a portion of the transmission resource.

In some embodiments, allocating the transmission resource to the part 2 CSI of the multiple CSI reports may be implemented as the following operation: the transmission resource is equally allocated to the part 2 CSIs of the multiple CSI reports.

The transmission resource is allocated to the part 2 CSI of the multiple CSI reports, so that the part 2 CSI in each CSI report is allocated the same transmission resource.

Exemplarily, the transmission resource may be an uplink grant overhead resource. When the remaining uplink grant overhead resource is N bits, and there are M CSI reports to be transmitted, and the bit overhead required for transmitting each CSI report meets $N_1 + N_2 +... + N_M < N$, it indicates that the remaining uplink grant overhead resource meets the bit overhead required for transmitting the multiple CSI reports. Further, the uplink grant overhead resource N is equally allocated to the M CSI reports, and each CSI report obtains N/M bits.

As another example, when the remaining transmission resource is 500 bits, and there are 5 CSI reports to be transmitted, 500 bits are capable of only transmitting the first 3 CSI reports, and are not available for transmitting all the CSI reports. 500 bits are equally allocated to the 5 CSI reports, and each CSI report obtains 100 bits of transmission resource.

In some embodiments, allocating the transmission resource to the part 2 CSI of the multiple CSI reports may be implemented as the following operations. The transmission resource is allocated according to weights to the part 2 CSI of the multiple CSI reports.

The weight of the part 2 CSI of the CSI report is determined based on the priority of the part 2 CSI of the CSI report.

Exemplarily, the transmission resource may be an uplink grant overhead resource. When the remaining uplink grant overhead resource is N bits, and there are M CSI reports to be transmitted, and the bit overhead required for transmitting each CSI report meets $N_1 + N_2 +... + N_M < N$, it indicates that the remaining uplink grant overhead resource may meet the bit overhead required for transmitting the multiple CSI reports. The N-bit resource is allocated according to respective weights $\alpha_1, \alpha_2,..., \alpha_M$ of the CSI reports to the M CSI reports, so that each CSI is allocated with $B_1$, $B_2$, ..., $B_M$ bits of transmission resource, where $\alpha_1 + \alpha_2 +... + \alpha_M = 1$, , $B_K = N \cdot \alpha_K$, $K = 1,2,...,M$, $B_1 + B_2 +... + B_M = N$.

As another example, when the remaining transmission resource is 500 bits, and there are 5 CSI reports to be transmitted, 500 bits are only capable of transmitting the first 3 CSI reports, and are not available for transmitting all the CSI reports. The 500-bit transmission resource is allocated according to the weight corresponding to each CSI report, and the bit resources obtained by the respective CSI reports are 200 bits, 150 bits, 80 bits, 50 bits, and 20 bits, respectively.

It should be noted that the weight of the part 2 CSI of the CSI report is determined based on the priority of the part 2 CSI of the CSI report, the weight of the part 2 CSI of the CSI report has a positive correlation with the priority of the part 2 CSI of the CSI report, and the higher the priority of the part 2 CSI of the CSI report, the higher the weight of the part 2 CSI of the CSI report. The allocation of the weight of the part 2 CSI of the CSI report is performed by the second communication node in FIG. 1 according to the priority of the part 2 CSI of the CSI report, or may be performed by the first communication node in FIG. 1 according to the priority of the part 2 CSI of the CSI report, and the usage of the transmission resource is reported to the second communication node.

In S1022, a part 2 CSI of a CSI report is transmitted on an allocated portion of the transmission resource.

Exemplarily, when the bit overhead required for transmitting the CSI report is 100 bits, and the allocated transmission resource is 150 bits, the allocated transmission resource may be available for transmitting the CSI report, then the entire content of the part 2 CSI of the CSI report is transmitted. When the bit overhead required for transmitting the CSI report is 100 bits, and the allocated transmission resource is 50 bits, the allocated transmission resource is not available for transmitting the CSI report, then partial content of the part 2 CSI of the CSI report is transmitted.

It can be understood that, to implement the above functions, the communication apparatus includes a corresponding hardware structure and/or software module for executing each function. Those skilled in the art should readily realize that, with the algorithm steps of each example described in the embodiments of the present disclosure, the present disclosure may be implemented in hardware or a combination of hardware and computer software. Whether a certain function is executed by hardware or by computer software driving hardware depends on the specific application and design constraints of the technical solution. Professional technicians may use different methods for each specific application to implement the described functions, but such implementation should not be considered beyond the scope of the present disclosure.

The embodiments of the present disclosure may divide functional modules of the communication apparatus according to the above method embodiments, for example, may divide each functional module corresponding to each function, or may integrate two or more functions in one functional module. The above integrated module may be implemented in a hardware form or a software form. It should be noted that the division of modules in the embodiments of the present disclosure is illustrative, and is only a logical function division, and there may be other division methods in actual implementation. The following uses dividing each functional module corresponding to each function as an example for description.

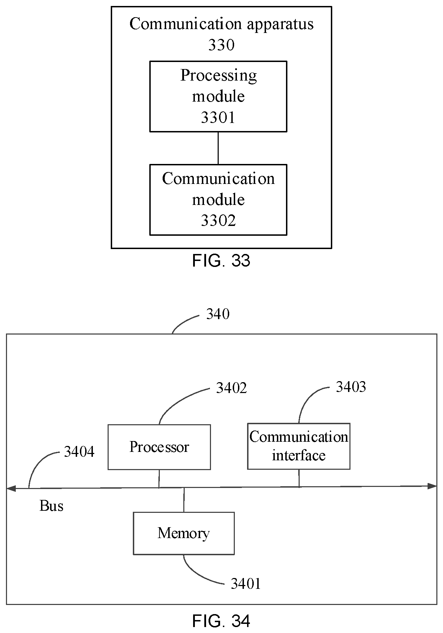

FIG. 33 is a structural schematic diagram of a communication apparatus provided in the embodiments of the present disclosure, and the communication apparatus 330 may execute the method related to the first communication node in the information feedback method provided in the above method embodiments. As shown in FIG. 33, the communication apparatus 330 includes a processing module 3301 and a communication module 3302.

The processing module 3301 is configured to acquire configuration information and process a channel state information (CSI) report according to the configuration information.

The communication module 3302 is configured to transmit the CSI report.

In some embodiments, the CSI report includes a part 1 CSI and a part 2 CSI; the communication module 3302 is configured to: transmit a segment in the part 2 of the CSI report based on a priority of the segment in the part 2 of the CSI report.

In some embodiments, the priority of the segments is determined according to at least one of: a layer to which the segment belongs, a layer group at which the segment is located, frequency domain information corresponding to the segment, time domain information corresponding to the segment, spatial domain information corresponding to the segment, and a quantization manner for the segment.

In some embodiments, a priority of a segment belonging to a layer with a lower index is higher than a priority of another segment belonging to another layer with a higher index.

In some embodiments, the quantization manner includes a quantization type and/or quantization precision.

In some embodiments, the communication module 3302 is configured to: in response to that a transmission resource does not support transmitting all segments in the part 2 CSI of the CSI report, transmit a segment with a higher priority in the part 2 CSI of the CSI report, and discarding or not transmitting a segment with a lower priority.

In some embodiments, a number of CSI reports is multiple, and each of the CSI reports includes a part 1 CSI and a part 2 CSI; the communication module 3302 is configured to: transmit segments in part 2 CSIs of the multiple CSI reports based on priorities of the segments in the part 2 CSIs of the multiple CSI reports.

In some embodiments, a priority of a segment is determined according to an identifier of a CSI report to which the segment belongs and a characteristic of the segment, and the characteristic of the segment comprises at least one of: a layer to which the segment belongs, a layer group at which the segment is located, frequency domain information corresponding to the segment, time domain information corresponding to the segment, spatial domain information corresponding to the segment, and a quantization manner for the segment.

In some embodiments, the communication module 3302 is configured to: in response to that a transmission resource does not support transmitting all segments in the part 2 CSIs of the multiple CSI reports, transmit segments with higher priorities in the part 2 CSIs of the multiple CSI reports, and discarding or not transmitting segments with lower priorities.

In some embodiments, a CSI report includes a part 1 CSI and a part 2 CSI; the processing module 3301 is configured to: adjust a quantization manner configured by the configuration information to obtain an adjusted quantization manner; and perform quantization processing on content of the part 2 CSI of the CSI report based on the adjusted quantization manner, to make a bit overhead of the part 2 CSI of the CSI report meet a constraint requirement of a transmission resource.

In some embodiments, the processing module 3301 is further configured to: adjust a number of elements in the CSI report or precoding information in the CSI report, to make a bit overhead of the CSI report meet a constraint requirement of a transmission resource.

In some embodiments, the processing module 3301 is configured to: adjust a compression ratio or a compression coefficient of the CSI report or the precoding information in the CSI report.

In some embodiments, the processing module 3301 is further configured to: puncture or discard an element or a bit in the part 2 CSI of the CSI report, to make a bit overhead of the part 2 CSI of the CSI report meet a constraint requirement of a transmission resource.

In some embodiments, the processing module 3301 is configured to: puncture or discard the element or the bit in the part 2 CSI of the CSI report based on a preset pattern.

In some embodiments, a number of CSI reports is multiple, each CSI report includes a part 1 CSI and a part 2 CSI; the communication module 3302 is configured to: allocate a transmission resource to part 2 CSIs of the multiple CSI reports, where a part 2 CSI of each of the CSI reports is allocated with a portion of the transmission resource; and transmit a part 2 CSI of a CSI report on an allocated portion of the transmission resource.

In some embodiments, the communication module 3302 is configured to: equally allocate the transmission resource to the part 2 CSIs of the multiple CSI reports.

In some embodiments, the communication module 3302 is configured to: allocate the transmission resource to the part 2 CSIs of the multiple CSI reports according to weights.

In some embodiments, a weight of a part 2 CSI of a CSI report is determined based on a priority of the part 2 CSI of the CSI report.

In a case where the functions of the above integrated modules are implemented in hardware, the embodiments of the present disclosure provide another structure of the communication apparatus involved in the above embodiments. As shown in FIG. 34, the communication apparatus 340 includes: a processor 3402 and a bus 3404. In some embodiments, the communication apparatus 340 may further include a memory 3401; in some embodiments, the communication apparatus 340 may further include a communication interface 3403.

The processor 3402 may implement or execute various exemplary logic blocks, modules, and circuits described in connection with embodiments of the present disclosure. The processor 3402 may be a central processing unit (CPU), a general purpose processor, a digital signal processor (DSP), an application specific integrated circuit (ASIC), a field programmable gate array (FPGA) or other programmable logic device, a transistor logic device, a hardware component, or any combination thereof. The processor 3402 may implement or execute various exemplary logic blocks, modules, and circuits described in connection with embodiments of the present disclosure. The processor 3402 may also be a combination of computing functions, for example, a combination of one or more microprocessors, a combination of a DSP and a microprocessor, etc.

The communication interface 3403 is configured to connect to other devices through a communication network. The communication network may be Ethernet, a radio access network (RAN), a wireless local area network (WLAN), or the like.

The memory 3401 may be a read-only memory (ROM) or other type of static storage device capable of storing static information and instructions, a random access memory (RAM) or other type of dynamic storage device capable of storing information and instructions, or may be an electrically erasable programmable read-only memory (EEPROM), a disk storage medium or other magnetic storage device, or any other medium that is capable of being used to carry or store desired program code in the form of instructions or data structures and that is capable of being accessed by a computer, but is not limited thereto.

As an implementation, the memory 3401 may exist independently from the processor 3402, and the memory 3401 may be connected to the processor 3402 via the bus 3404 for storing instructions or program code. When the processor 3402 calls and executes the instructions or program code stored in the memory 3401, the CSI report feedback method provided by the embodiments of the present disclosure may be implemented.

In another implementation, the memory 3401 may also be integrated with the processor 3402.

The bus 3404 may be an extended industry standard architecture (EISA) bus or the like. The bus 3404 may be divided into an address bus, a data bus, a control bus, and the like. For ease of representation, only one thick line is used in FIG. 34 for the bus 3404, but it does not mean that there is only one bus or one type of bus.

Some embodiments of the present disclosure provide a computer-readable storage medium (for example, a non-transitory computer-readable storage medium), where the computer-readable storage medium stores computer program instructions, and when the computer program instructions run on a computer, the computer is caused to execute the CSI report feedback method described in any one of the foregoing embodiments.

For example, the computer-readable storage medium may include, but is not limited to: a magnetic storage device (for example, a hard disk, a floppy disk, or a magnetic tape, etc.), an optical disk (for example, a compact disk (CD), a digital versatile disk (DVD), etc.), a smart card, and a flash memory device (for example, an erasable programmable read-only memory (EPROM), a card, a stick, or a key drive, etc.). The various computer-readable storage media described in the present disclosure may represent one or more devices and/or other machine-readable storage media for storing information. The term "machine-readable storage medium" may include, but is not limited to, a wireless channel and various other media capable of storing, containing, and/or carrying instructions and/or data.

An embodiment of the present disclosure provides a computer program product comprising instructions, and when the computer program product runs on a computer, the computer is caused to execute the CSI report feedback method described in any one of the foregoing embodiments.

The foregoing descriptions are merely specific embodiments of the present disclosure, but the protection scope of the present disclosure is not limited thereto. Any change or replacement within the technical scope disclosed in the present disclosure shall be covered within the protection scope of the present disclosure. Therefore, the protection scope of the present disclosure shall be determined based on the protection scope of the claims.

## Claims

1.  A channel state information report feedback method, **characterized by** comprising:

    acquiring configuration information, and processing a channel state information (CSI) report according to the configuration information; and transmitting the CSI report.

2.  The method according to claim 1, wherein the CSI report comprises a first-part CSI and a second-part CSI; and transmitting the CSI report comprises: transmitting a segment in the second-part CSI of the CSI report based on a priority of the segment in the second-part CSI of the CSI report.

3.  The method according to claim 2, wherein the priority of the segment is determined according to at least one of: a layer to which the segment belongs, a layer group at which the segment is located, frequency domain information corresponding to the segment, time domain information corresponding to the segment, spatial domain information corresponding to the segment, and a quantization manner for the segment.

4. The method according to claim 3, wherein a priority of a segment belonging to a layer with a lower index is higher than a priority of another segment belonging to another layer with a higher index.

5. The method according to claim 3, wherein the quantization manner comprises a quantization type and/or a quantization precision.

6. The method according to claim 2, wherein transmitting the segment in the second-part CSI of the CSI report based on the priority of the segment in the second-part CSI of the CSI report comprises: in response to that a transmission resource does not support transmitting all segments in the second-part CSI of the CSI report, transmitting a segment with a higher priority in the second-part CSI of the CSI report, and discarding or not transmitting a segment with a lower priority.

7. The method according to claim 1, wherein a number of CSI reports is multiple, and each of the CSI reports comprises a first-part CSI and a second-part CSI; and transmitting the CSI report comprises: transmitting segments in second-part CSIs of the multiple CSI reports based on priorities of the segments in the second-part CSIs of the multiple CSI reports.

8. The method according to claim 7, wherein a priority of a segment is determined according to an identifier of a CSI report to which the segment belongs and a characteristic of the segment, and the characteristic of the segment comprises at least one of: a layer to which the segment belongs, a layer group at which the segment is located, frequency domain information corresponding to the segment, time domain information corresponding to the segment, spatial domain information corresponding to the segment, and a quantization manner for the segment.

9. The method according to claim 7, wherein transmitting the segments in the second-part CSIs of the multiple CSI reports based on the priorities of the segments in the second-part CSIs of the multiple CSI reports comprises: in response to that a transmission resource does not support transmitting all segments in the second-part CSIs of the multiple CSI reports, transmitting segments with higher priorities in the second-part CSIs of the multiple CSI reports, and discarding or not transmitting segments with lower priorities.

10. The method according to claim 1, wherein the CSI report comprises a first-part CSI and a second-part CSI; and processing the channel state information (CSI) report according to the configuration information comprises:

    adjusting a quantization manner configured by the configuration information to obtain an adjusted quantization manner; and
    performing quantization processing on a content of the second-part CSI of the CSI report based on the adjusted quantization manner, to make a bit overhead of the second-part CSI of the CSI report meet a constraint requirement of a transmission resource.

11. The method according to claim 1, wherein before transmitting the CSI report, the method comprises: adjusting a number of elements in the CSI report or precoding information in the CSI report, to make a bit overhead of the CSI report meet a constraint requirement of a transmission resource.

12. The method according to claim 11, wherein adjusting the number of elements in the CSI report or the precoding information in the CSI report comprises: adjusting a compression ratio or a compression coefficient of the CSI report or the precoding information in the CSI report.

13. The method according to claim 1, wherein the CSI report comprises a first-part CSI and a second-part CSI; before transmitting the CSI report, the method comprises: puncturing or discarding an element or a bit in the second-part CSI of the CSI report, to make a bit overhead of the second-part CSI of the CSI report meet a constraint requirement of a transmission resource.

14. The method according to claim 13, wherein puncturing or discarding the element or the bit in the second-part CSI of the CSI report comprises: puncturing or discarding the element or the bit in the second-part CSI of the CSI report based on a preset pattern.

15. The method according to claim 1, wherein a number of CSI reports is multiple, and each of the CSI reports comprises a first-part CSI and a second-part CSI; and transmitting the CSI report comprises:

    allocating a transmission resource to second-part CSIs of the multiple CSI reports, wherein a second-part CSI of each of the CSI reports is allocated with a portion of the transmission resource; and
    transmitting a second-part CSI of a CSI report on an allocated portion of the transmission resource.

16. The method according to claim 15, wherein allocating the transmission resource to the second-part CSIs of the multiple CSI reports comprises:
equally allocating the transmission resource to the second-part CSIs of the multiple CSI reports.

17. The method according to claim 15, wherein allocating the transmission resource to the second-part CSIs of the multiple CSI reports comprises:
allocating the transmission resource to the second-part CSIs of the multiple CSI reports according to weights.

18. The method according to claim 17, wherein a weight of a second-part CSI of a CSI report is determined based on a priority of the second-part CSI of the CSI report.

19. A communication apparatus, **characterized by** comprising a processor, wherein the processor, upon executing a computer program, implements the channel state information report feedback method according to any one of claims 1 to 18.

20. A computer-readable storage medium, comprising computer instructions; wherein, when the computer instructions are executed, the channel state information report feedback method according to any one of claims 1 to 18 is implemented.

FIG. 1

| Acquire configuration information, and process a channel state information (CSI) report according to the configuration information | S101 |

| Send the CSI report | S102 |

FIG. 2

| First-part channel state information<br><br>Part 1 CSI | Second-part channel state information<br><br>Part 2 CSI |

FIG. 3

| Adjust a quantization manner configured by the configuration information to obtain an adjusted quantization manner | S1011 |

| Perform quantization processing on content of the second-part CSI of the CSI report based on the adjusted quantization manner, to make a bit overhead of the second-part CSI of the CSI report meet a constraint requirement of a transmission resource | S1012 |

FIG. 4

| Layer 1 Precode | Layer 2 Precode | ... | Layer N Precode |

High ⟹ Low

Priority

FIG. 5

Group 1          Group 2                              Group M

| Layer 1 Precode<br>Layer 2 Precode | Layer 3 Precode<br>Layer 4 Precode | ... | Layer N-1 Precode<br>Layer N Precode |

High ⟶ Low

Priority

FIG. 6

Group 1          Group 2                              Group M

| Layer 1 Precode<br>Layer 2 Precode | Layer 3 Precode | ... | Layer N-1 Precode<br>Layer N Precode |

High ⟶ Low

Priority

FIG. 7

High

Priority

Low

| Layer group 1<br>Frequency domain<br>unit group 1<br>Precode | Layer group 1<br>Frequency domain<br>unit group 2<br>Precode | ... | Layer group 1<br>Frequency domain<br>unit group $M_1$<br>Precode |
| Layer group 2<br>Frequency domain<br>unit group 1<br>Precode | Layer group 2<br>Frequency domain<br>unit group 2<br>Precode | ... | Layer group 2<br>Frequency domain<br>unit group $M_2$<br>Precode |
| ... | ... | ... | ... |
| Layer group P<br>Frequency domain<br>unit group 1<br>Precode | Layer group P<br>Frequency domain<br>unit group 2<br>Precode | ... | Layer group P<br>Frequency domain<br>unit group $M_P$<br>Precode |

High ⟶ Low

Priority

FIG. 8

| High | Layer group 1 Frequency domain unit group 1 Precode | Layer group 2 Frequency domain unit group 1 Precode | ... | Layer group P Frequency domain unit group 1 Precode |
|---|---|---|---|---|
| Priority | Layer group 1 Frequency domain unit group 2 Precode | Layer group 2 Frequency domain unit group 2 Precode | ... | Layer group P Frequency domain unit group 2 Precode |
| | ... | ... | ... | ... |
| Low | Layer group 1 Frequency domain unit group $M_1$ Precode | Layer group 2 Frequency domain unit group $M_2$ Precode | ... | Layer group P Frequency domain unit group $M_P$ Precode |

High ⟶ Low
Priority

## FIG. 9

| Layer group 1 Even-numbered frequency domain unit group Precode | Layer group 1 Odd-numbered frequency domain unit group Precode | Layer group 2 Even-numbered frequency domain unit group Precode | Layer group 2 Odd-numbered frequency domain unit group Precode | ... | Layer group P Even-numbered frequency domain unit group Precode | Layer group P Odd-numbered frequency domain unit group Precode |
|---|---|---|---|---|---|---|

High ⟶ Low
Priority

## FIG. 10

| Layer group 1 Even-numbered frequency domain unit group Precode | Layer group 2 Even-numbered frequency domain unit group Precode | ... | Layer group P Even-numbered frequency domain unit group Precode | Layer group 1 Odd-numbered frequency domain unit group Precode | Layer group 2 Odd-numbered frequency domain unit group Precode | ... | Layer group P Odd-numbered frequency domain unit group Precode |
|---|---|---|---|---|---|---|---|

High ⟶ Low
Priority

## FIG. 11

| High | Layer group 1 Spatial domain unit group 1 Precode | Layer group 1 Spatial domain unit group 2 Precode | ... | Layer group 1 Spatial domain unit group $M'_1$ Precode |
|---|---|---|---|---|
| Priority | Layer group 2 Spatial domain unit group 1 Precode | Layer group 2 Spatial domain unit group 2 Precode | ... | Layer group 2 Spatial domain unit group $M'_2$ Precode |
| | ... | ... | ... | ... |
| Low | Layer group P' Spatial domain unit group 1 Precode | Layer group P' Spatial domain unit group 2 Precode | ... | Layer group P' Spatial domain unit group $M'_{P'}$ Precode |

High ⟶ Low
Priority

## FIG. 12

FIG. 13

FIG. 14

FIG. 15

FIG. 16

| High<br><br>Priority<br><br>Low | Layer group 1<br>Time domain unit<br>group 1 Precode | Layer group 2<br>Time domain unit<br>group 1 Precode | ... | Layer group P"<br>Time domain unit<br>group 1 Precode |
| --- | --- | --- | --- | --- |
| | Layer group 1<br>Time domain unit<br>group 2 Precode | Layer group 2<br>Time domain unit<br>group 2 Precode | ... | Layer group P"<br>Time domain unit<br>group 2 Precode |
| | ... | ... | ... | ... |
| | Layer group 1<br>Time domain unit<br>group M"$_1$<br>Precode | Layer group 2<br>Time domain unit<br>group M"$_2$<br>Precode | ... | Layer group P"<br>Time domain unit<br>group M"$_{P"}$<br>Precode |

High ⟶ Low
Priority

**FIG. 17**

| Layer group 1<br>Odd-numbered<br>time domain<br>unit group<br>Precode | Layer group 1<br>Even-numbered<br>time domain<br>unit group<br>Precode | Layer group 2<br>Odd-numbered<br>time domain<br>unit group<br>Precode | Layer group 2<br>Even-numbered<br>time domain<br>unit group<br>Precode | ... | Layer group P"<br>Odd-numbered<br>time domain<br>unit group<br>Precode | Layer group P"<br>Even-numbered<br>time domain<br>unit group<br>Precode |
| --- | --- | --- | --- | --- | --- | --- |

High ⟶ Low
Priority

**FIG. 18**

| Layer group 1<br>Odd-numbered<br>time domain<br>unit group<br>Precode | Layer group 2<br>Odd-numbered<br>time domain<br>unit group<br>Precode | ... | Layer group P"<br>Odd-numbered<br>time domain<br>unit group<br>Precode | Layer group 1<br>Even-numbered<br>time domain<br>unit group<br>Precode | Layer group 2<br>Even-numbered<br>time domain<br>unit group<br>Precode | ... | Layer group P"<br>Even-numbered<br>time domain<br>unit group<br>Precode |
| --- | --- | --- | --- | --- | --- | --- | --- |

High ⟶ Low
Priority

**FIG. 19**

Low

Priority

High

| Time domain unit group M Layer group 1 Frequency domain unit group 1 Precode | Time domain unit group M Layer group 1 Frequency domain unit group 2 Precode | ... | Time domain unit group M Layer group 1 Frequency domain unit group $G_1$ Precode |

.
.

High

Priority

Low

| Time domain unit group 2 Layer group 1 Frequency domain unit group 1 Precode | Time domain unit group 2 Layer group 1 Frequency domain unit group 2 Precode | ... | Time domain unit group 2 Layer group 1 Frequency domain unit group $G_1$ Precode |
| Time domain unit group 1 Layer group 1 Frequency domain unit group 1 Precode | Time domain unit group 1 Layer group 1 Frequency domain unit group 2 Precode | ... | Time domain unit group 1 Layer group 1 Frequency domain unit group $G_1$ Precode | $G_2$ |
| Time domain unit group 1 Layer group 2 Frequency domain unit group 1 Precode | Time domain unit group 1 Layer group 2 Frequency domain unit group 2 Precode | ... | Time domain unit group 1 Layer group 2 Frequency domain unit group $G_2$ Precode | |
| ... | ... | ... | ... | $G_P$ |
| Time domain unit group 1 Layer group P Frequency domain unit group 1 Precode | Time domain unit group 1 Layer group P Frequency domain unit group 2 Precode | ... | Time domain unit group 1 Layer group P Frequency domain unit group $G_P$ Precode | |

High → Low

Priority

FIG. 20

Low

Priority

High

| Time domain unit group M Layer group 1 Frequency domain unit group 1 Precode | Time domain unit group M Layer group 2 Frequency domain unit group 1 Precode | ... | Time domain unit group M Layer group P Frequency domain unit group 1 Precode |

.
.

High

Priority

Low

| Time domain unit group 2 Layer group 1 Frequency domain unit group 1 Precode | Time domain unit group 2 Layer group 2 Frequency domain unit group 1 Precode | ... | Time domain unit group 2 Layer group P Frequency domain unit group 1 Precode |
| Time domain unit group 1 Layer group 1 Frequency domain unit group 1 Precode | Time domain unit group 1 Layer group 2 Frequency domain unit group 1 Precode | ... | Time domain unit group 1 Layer group P Frequency domain unit group 1 Precode | B2 |
| Time domain unit group 1 Layer group 1 Frequency domain unit group 2 Precode | Time domain unit group 1 Layer group 2 Frequency domain unit group 2 Precode | ... | Time domain unit group 1 Layer group P Frequency domain unit group 2 Precode | |
| ... | ... | ... | ... | $M_P$ |
| Time domain unit group 1 Layer group 1 Frequency domain unit group G1 Precode | Time domain unit group 1 Layer group 2 Frequency domain unit group G2 Precode | ... | Time domain unit group 1 Layer group P Frequency domain unit group GP Precode | |

High → Low

Priority

FIG. 21

29

Low

Priority

High

| Time domain unit group M Layer group 1 Spatial domain unit group 1 Precode | Time domain unit group M Layer group 1 Spatial domain unit group 2 Precode | ... | Time domain unit group M Layer group 1 Spatial domain unit group H₁ Precode |

$\cdot$
$\cdot$

High

Priority

Low

| Time domain unit group 2 Layer group 1 Spatial domain unit group 1 Precode | Time domain unit group 2 Layer group 1 Spatial domain unit group 2 Precode | ... | Time domain unit group 2 Layer group 1 Spatial domain unit group H₁ Precode | |
| Time domain unit group 1 Layer group 1 Spatial domain unit group 1 Precode | Time domain unit group 1 Layer group 1 Spatial domain unit group 2 Precode | ... | Time domain unit group 1 Layer group 1 Spatial domain unit group H₁ Precode | H₂ |
| Time domain unit group 1 Layer group 2 Spatial domain unit group 1 Precode | Time domain unit group 1 Layer group 2 Spatial domain unit group 2 Precode | ... | Time domain unit group 1 Layer group 2 Spatial domain unit group H₂ Precode | |
| ... | ... | ... | ... | H_P |
| Time domain unit group 1 Layer group P Spatial domain unit group 1 Precode | Time domain unit group 1 Layer group P Spatial domain unit group 2 Precode | ... | Time domain unit group 1 Layer group P Spatial domain unit group H_P Precode | |

High ⟶ Low

Priority

FIG. 22

Low

Priority

High

| Time domain unit group M Layer group 1 Spatial domain unit group 1 Precode | Time domain unit group M Layer group 2 Spatial domain unit group 1 Precode | ... | Time domain unit group M Layer group P Spatial domain unit group 1 Precode |

$\cdot$
$\cdot$

High

Priority

Low

| Time domain unit group 2 Layer group 1 Spatial domain unit group 1 Precode | Time domain unit group 2 Layer group 2 Spatial domain unit group 1 Precode | ... | Time domain unit group 2 Layer group P Spatial domain unit group 1 Precode | |
| Time domain unit group 1 Layer group 1 Spatial domain unit group 1 Precode | Time domain unit group 1 Layer group 2 Spatial domain unit group 1 Precode | ... | Time domain unit group 1 Layer group P Spatial domain unit group 1 Precode | H2 |
| Time domain unit group 1 Layer group 1 Spatial domain unit group 2 Precode | Time domain unit group 1 Layer group 2 Spatial domain unit group 2 Precode | ... | Time domain unit group 1 Layer group P Spatial domain unit group 2 Precode | |
| ... | ... | ... | ... | H_P |
| Time domain unit group 1 Layer group 1 Spatial domain unit group H₁ Precode | Time domain unit group 1 Layer group 2 Spatial domain unit group H₂ Precode | ... | Time domain unit group 1 Layer group P Spatial domain unit group H_P Precode | |

High ⟶ Low

Priority

FIG. 23

| CSI report 1 Layer 1 Precode | CSI report 1 Layer 2 Precode | ... | CSI report 1 Layer N Precode | ... | CSI report M Layer 1 Precode | CSI report M Layer 2 Precode | ... | CSI report M Layer N Precode |
|---|---|---|---|---|---|---|---|---|

High ⟶ Low

Priority

**FIG. 24**

| CSI report 1 Layer 1 Precode | CSI report 2 Layer 1 Precode | ... | CSI report M Layer 1 Precode | ... | CSI report 1 Layer N Precode | CSI report 2 Layer N Precode | ... | CSI report M Layer N Precode |
|---|---|---|---|---|---|---|---|---|

High ⟶ Low

Priority

**FIG. 25**

| CSI report 1 | CSI report 1 | | CSI report 1 | | CSI report M | CSI report M | | CSI report M |
|---|---|---|---|---|---|---|---|---|
| Group 1 Layer 1 Precode Layer 2 Precode | Group 2 Layer 3 Precode Layer 4 Precode | ... | Group K Layer N-1 Precode Layer N Precode | ... | Group 1 Layer 1 Precode Layer 2 Precode | Group 2 Layer 3 Precode Layer 4 Precode | ... | Group K Layer N-1 Precode Layer N Precode |

High ⟶ Low

Priority

**FIG. 26**

| CSI report 1 | CSI report 2 | | CSI report M | | CSI report 1 | CSI report 2 | | CSI report M |
|---|---|---|---|---|---|---|---|---|
| Group 1 Layer 1 Precode Layer 2 Precode | Group 1 Layer 1 Precode Layer 2 Precode | ... | Group 1 Layer 1 Precode Layer 2 Precode | ... | Group K Layer N-1 Precode Layer N Precode | Group K Layer N-1 Precode Layer N Precode | ... | Group K Layer N-1 Precode Layer N Precode |

High ⟶ Low

Priority

**FIG. 27**

| Group 0 | Group 1 | | Group M |
|---|---|---|---|
| CSI report 1->M Layer 1->Layer L Precode | CSI report 1 Layer L+1->Layer N Precode | ... | CSI report M Layer L+1->Layer N Precode |

High ⟶ Low

Priority

**FIG. 28**

| | | Group 1 | | Group $Y_1$ | Group $Y_1+1$ | | Group $Y_1+Y_2$ | | Group $Y_1+...Y_{N-1}+1$ | | Group $Y_1+Y_2+...Y_N$ |
|---|---|---|---|---|---|---|---|---|---|---|---|
| High | CSI report 1 | Layer 1 precoding group 1 | ... | Layer 1 precoding group $Y_1$ | Layer 2 precoding group 1 | ... | Layer 2 precoding group $Y_2$ | ... | Layer N precoding group 1 | ... | Layer N precoding group $Y_N$ |
| | CSI report 2 | Layer 1 precoding group 1 | ... | Layer 1 precoding group $Y_1$ | Layer 2 precoding group 1 | ... | Layer 2 precoding group $Y_2$ | ... | Layer N precoding group 1 | ... | Layer N precoding group $Y_N$ |
| | ... | Layer 1 precoding group 1 | ... | Layer 1 precoding group $Y_1$ | Layer 2 precoding group 1 | ... | Layer 2 precoding group $Y_2$ | ... | Layer N precoding group 1 | ... | Layer N precoding group $Y_N$ |
| Low | CSI report M | Layer 1 precoding group 1 | ... | Layer 1 precoding group $Y_1$ | Layer 2 precoding group 1 | ... | Layer 2 precoding group $Y_2$ | ... | Layer N precoding group 1 | ... | Layer N precoding group $Y_N$ |

Priority (vertical axis): High → Low

High ⟶ Priority ⟶ Low

FIG. 29

CSI processing unit

Initial channel state information → First processing module → Precode 1

Second processing module → Precode 2

...

Q-th processing module → Precode Q

FIG. 30

Initial channel state information → First CSI processing unit → Precode 1 → Second CSI processing unit → Precode 2 →

FIG. 31

Allocate a transmission resource to second-part CSIs of the multiple CSI reports, where a second-part CSI of each of the CSI reports is allocated with a portion of the transmission resource — S1021

Transmit a second-part CSI of a CSI report on an allocated portion of the transmission resource — S1022

FIG. 32

EP 4 783 495 A1

Communication apparatus
330

Processing
module
3301

Communication
module
3302

FIG. 33

340

3402          3403

3404    Processor    Communication
interface

Bus

Memory

3401

FIG. 34

33

## INTERNATIONAL SEARCH REPORT

| International application No. |
|---|
| **PCT/CN2024/089645** |

| A. | CLASSIFICATION OF SUBJECT MATTER |
|---|---|

H04L1/00(2006.01)i

According to International Patent Classification (IPC) or to both national classification and IPC

| B. | FIELDS SEARCHED |
|---|---|

Minimum documentation searched (classification system followed by classification symbols)

IPC: H04L G06F

Documentation searched other than minimum documentation to the extent that such documents are included in the fields searched

Electronic data base consulted during the international search (name of data base and, where practicable, search terms used)

3GPP, CJFD, IEEE, CNABS, CNTXT, DWPI, ENTXTC, VEN, ENTXT: 配置信息, 信道状态信息, 第一部分, 第二部分, 优先级, 片段, 层, 分组, 频域, 时域, 空域, 量化, CSI, configuration, part, first, second, number, high, low, priority, layer, group

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114760654 A (BEIJING UNISOC COMMUNICATIONS TECHNOLOGY CO., LTD.) 15 July 2022 (2022-07-15) description, paragraphs 55-88, 151, and 164-166 | 1-20 |
| X | US 2022303812 A1 (LG ELECTRONICS INC.) 22 September 2022 (2022-09-22) description, paragraphs 148-161 and 224-230 | 1-2 |
| A | CN 114826350 A (ZTE CORP.) 29 July 2022 (2022-07-29) entire document | 1-20 |
| A | CN 113708810 A (HUAWEI TECHNOLOGIES CO., LTD.) 26 November 2021 (2021-11-26) entire document | 1-20 |
| A | CN 114641031 A (BEIJING UNISOC COMMUNICATIONS TECHNOLOGY CO., LTD.) 17 June 2022 (2022-06-17) entire document | 1-20 |
| A | CN 111614435 A (VIVO MOBILE COMMUNICATION CO., LTD.) 01 September 2020 (2020-09-01) entire document | 1-20 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 July 2024** | **15 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 783 495 A1**

INTERNATIONAL SEARCH REPORT
Information on patent family members

International application No.

**PCT/CN2024/089645**

| Patent document cited in search report | | | Publication date (day/month/year) | Patent family member(s) | | | Publication date (day/month/year) |
|---|---|---|---|---|---|---|---|
| CN | 114760654 | A | 15 July 2022 | None | | | |
| US | 2022303812 | A1 | 22 September 2022 | WO | 2021029701 | A1 | 18 February 2021 |
| | | | | KR | 20220046608 | A | 14 April 2022 |
| | | | | EP | 4064585 | A1 | 28 September 2022 |
| | | | | EP | 4064585 | A4 | 23 August 2023 |
| | | | | JP | 2022544689 | A | 20 October 2022 |
| | | | | JP | 7352013 | B2 | 27 September 2023 |
| CN | 114826350 | A | 29 July 2022 | None | | | |
| CN | 113708810 | A | 26 November 2021 | None | | | |
| CN | 114641031 | A | 17 June 2022 | None | | | |
| CN | 111614435 | A | 01 September 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311295521X